# EUROPEAN PATENT SPECIFICATION

(11) **EP 3 843 305 B1**
(45) Date of publication and mention of the grant of the patent: **08.10.2025**
(21) Application number: 19866661.2
(22) Date of filing: 20.08.2019
(51) Int. Cl.: H04L 1/00, H04W 72/04

(54) **INFORMATION TRANSMISSION METHOD AND INFORMATION TRANSMISSION DEVICE**
INFORMATIONSÜBERTRAGUNGSVERFAHREN UND INFORMATIONSÜBERTRAGUNGSVORRICHTUNG
PROCÉDÉ DE TRANSMISSION D'INFORMATIONS ET DISPOSITIF DE TRANSMISSION D'INFORMATIONS

(30) Priority: 28.09.2018 CN 201811143556
(43) Date of publication of application: 30.06.2021
(73) Proprietor: HUAWEI TECHNOLOGIES CO., LTD., Shenzhen, Guangdong 518129 (CN)
(72) Inventor: SHAO, Jiafeng, Shenzhen, Guangdong 518129 (CN)
(74) Representative: Thun, Clemens
(86) International application number: PCT/CN2019/101480
(87) International publication number: WO 2020/063193

(56) References cited:
- EP-A1- 3 726 759
- WO-A1-2012/171224
- WO-A1-2013/187824
- CN-A- 108 390 741
- US-A1- 2010 056 079
- US-A1- 2010 115 358
- US-A1- 2015 003 429
- SAMSUNG: "DL control for CBG (re)transmissions", vol. RAN WG1, no. Prague, Czechia; 20170821 - 20170825, 20 August 2017 (2017-08-20), XP051316442, Retrieved from the Internet <URL:http://www.3gpp.org/ftp/Meetings_3GPP_SYNC/RAN1/Docs/> [retrieved on 20170820]
- LG ELECTRONICS: "Discussion on resource allocation and TBS determination", R1-1717965 3GPP TSG RAN WG1 MEETING 90BIS, 13 October 2017 (2017-10-13), XP051341149
- "3rd Generation Partnership Project; Technical Specification Group Radio Access Network", 3GPP TS 38.214 V15.2.0, 29 June 2018 (2018-06-29), XP051474491

## Description

### TECHNICAL FIELD

This application relates to the field of communications technologies, and in particular, to an information transmission method, a related device, and a computer-readable storage medium.

### BACKGROUND

To cope with explosive mobile data traffic growth, massive mobile communications device connections, and emerging new services and application scenarios in the future, a fifth generation (the fifth generation, 5G) mobile communications system emerges. The 5G mobile communications system is also referred to as a new radio access technology (new radio access technology, NR) system. The NR system includes an ultra-reliable and low-latency communication (ultra reliable and low latency communications, URLLC) service. Typical URLLC services include tactile interaction applications such as wireless control in an industrial manufacturing or production process, motion control and remote repair of a self-driving car and an unmanned aerial vehicle, and remote surgery. These services are mainly characterized by requirements for ultra-high reliability, a low latency, a relatively small data transmission amount, and burstiness.

When a network device sends downlink data to a terminal device, the terminal device receives downlink control information (downlink control information, DCI) sent by the network device. The DCI is used to indicate transmission information of a physical downlink shared channel (physical downlink shared channel, PDSCH), and the transmission information includes information such as a time-frequency resource occupied by the PDSCH and a modulation and coding scheme. The terminal device receives the PDSCH channel based on the received DCI. To improve a transmission rate of the terminal device, the network device transmits at least two transport blocks through the PDSCH. The at least two transport blocks carry different data information. The terminal device needs to obtain, based on the time-frequency resource and the modulation and coding scheme that correspond to the PDSCH carrying the transport blocks, transport block sizes (transport block size, TBS) of the at least two transport blocks through calculation. However, when the at least two transport blocks are transmitted, how to improve reliability of the data information to satisfy the requirements of the URLLC service is an urgent problem to be resolved.
The document US 2010/0056079 A1 shows a system and method for retransmission between DCI format 1A and format 2/2A.
The document EP 3 726 759 A1 shows an information transmission method and apparatus, especially in the context of mobile communications.
The document WO 2013/187824 A1 shows a system and method for mapping retransmissions responsive to bundled NACK messages and related devices for multi-layer MIMO transmission.
The document Samsung: "DL control for CBG (re)transmissions", R1-1713642 is an early standardization document regarding downlink control in mobile communications systems.
The document US 2010/0115358 A1 shows a system and method for efficient control signaling of two codeword to one codeword transmissions.

### SUMMARY

The invention is defined in the independent claims. Advantageous features are defined in the dependent claims.

The present invention provides an information transmission method and an information transmission apparatus, which can effectively improve data information transmission reliability, to satisfy a requirement of a URLLC service.

According to a first aspect, an embodiment of the present invention provides an information transmission method. The method includes: Step A: A terminal device receives downlink control information DCI. For example, the terminal device may determine a first transport block and a second transport block through one or more pieces of DCI. Transmission of the first transport block and transmission of the second transport block correspond to a same codeword or different codewords, and/or time-frequency resources in which the first transport block and the second transport block are located completely or partially overlap. Step B: The terminal device obtains a target transport block size TBS. Step C: The terminal device receives the first transport block and/or the second transport block based on the DCI and the target TBS. In this aspect, a network device intends to improve data information transmission reliability, so that each of a TBS corresponding to the first transport block and a TBS corresponding to the second transport block is the target TBS.

In a possible design, the terminal device determines the target TBS based on at least one of the following: the network device determining the target TBS through an indication of higher layer signaling and/or the DCI, the terminal device determining the TBS of the first transport block as the target TBS, the terminal device determining the TBS of the second transport block as the target TBS, or the terminal device pre-storing the target TBS.

In a possible design, when the terminal device determines that the first transport block and the second transport block carry same data information, the terminal device receives the data information by using the first transport block and/or the second transport block.

In a possible design, the terminal device decodes the first transport block based on the DCI and the target TBS.

In a possible design, the terminal device decodes the second transport block based on the DCI and the target TBS.

In a possible design, the terminal device jointly decodes the first transport block and the second transport block based on the DCI and the target TBS.

In the foregoing solution, provided that the terminal device successfully decodes either of the first transport block and the second transport block, the terminal device successfully receives the data information sent by the network device by using the first transport block and the second transport block.

According to the information transmission method shown in this aspect, the network device sends, to the terminal device, the first transport block and the second transport block that carry the same data information. Because the first transport block and the second transport block correspond to different spatial channels, and/or the terminal device receives same data information on different time-frequency resources, the terminal device can receive the same data information by using different transport blocks, thereby improving reliability of receiving the data information by the terminal device. The terminal device decodes, based on the determined target TBS, the two transport blocks sent by the network device, and does not need to necessarily comply with the current technology to calculate a TBS corresponding to each transport block and decode the transport block based on the TBS obtained through calculation, thereby improving a success rate of receiving the data information by the terminal device, effectively improving data transmission reliability, and being more applicable to ultra-reliable and low-latency communication URLLC in an NR system.

In a possible design, the step B may specifically include a step B11 and a step B12. Step B11: The terminal device determines a reference transport block. The reference transport block is one of the first transport block and the second transport block. In this aspect, the terminal device determines the reference transport block based on information carried in the DCI and/or higher layer signaling sent by the network device. Step B 12: The terminal device obtains the target TBS based on a reference TBS corresponding to the reference transport block. For example, the reference TBS corresponding to the reference transport block is equal to the target TBS. For another example, the target TBS is determined by a function that uses the reference TBS corresponding to the reference transport block as a variable. For another example, a difference between the target TBS determined by the terminal device and the reference TBS corresponding to the reference transport block is less than a preset threshold, and the preset threshold may be configured by using the higher layer signaling or predefined. According to this solution, the terminal device determines the reference transport block from the first transport block and the second transport block based on an indication of the network device through the DCI and/or the higher layer signaling, and determines the target TBS based on the reference TBS of the reference transport block. In this case, the terminal device decodes both the first transport block and the second transport block based on the target TBS, thereby improving a success rate of receiving data information by the terminal device, effectively improving data transmission reliability, and being more applicable to ultra-reliable and low-latency communication URLLC in an NR system.

In another possible design, the step B11 may specifically include: The terminal device determines the reference transport block based on indication information. For example, the indication information is higher layer signaling used to indicate the reference transport block. For example, the higher layer signaling may carry a reference field used to indicate the reference transport block. For another example, the higher layer signaling may indicate that a transport block corresponding to a target codeword is the reference transport block. For another example, the indication information includes modulation and coding scheme MCS information corresponding to the first transport block and MCS information corresponding to the second transport block, and the MCS information includes at least one of the following: an MCS index, a coding rate, a modulation order, or spectral efficiency. Specifically, the terminal device may compare the modulation and coding scheme MCS information corresponding to the first transport block with the MCS information corresponding to the second transport block, and determine the reference transport block based on a comparison result. For example, the terminal device determines, from the first transport block and the second transport block, a transport block corresponding to a relatively small or large spectral efficiency as the reference transport block. For another example, the terminal device determines, from the first transport block and the second transport block, a transport block corresponding to a relatively large or small modulation order as the reference transport block. For another example, the terminal device determines, from the first transport block and the second transport block, a transport block corresponding to a relatively large or small coding rate as the reference transport block. For another example, when the modulation and coding scheme MCS information corresponding to the first transport block is the same as the MCS information corresponding to the second transport block, the terminal device determines either of the first transport block and the second transport block as the reference transport block. For example, the indication information includes the modulation and coding scheme MCS information corresponding to the first transport block, and the terminal device determines that the reference transport block is the first transport block or the second transport block. For another example, the indication information includes the modulation and coding scheme MCS information corresponding to the second transport block, and the terminal device determines that the reference transport block is the first transport block or the second transport block. For another example, the indication information is information that is included in the DCI and that is used to indicate the reference transport block. According to this solution, the terminal device determines the reference transport block based on the indication information. Different indication information may enable the terminal device to determine the reference transport block in different manners, so that the method in this aspect can adapt to different application scenarios and be more applicable to ultra-reliable and low-latency communication URLLC in an NR system.

In another possible design, the step B11 may specifically include: Step B21: The terminal device determines preset MCS information, where the preset MCS information may be configured by using higher layer signaling, or may be predefined. Step B32: The terminal device determines the reference transport block based on the preset MCS information. For example, when the MCS information corresponding to the first transport block is the same as the preset MCS information, the terminal device determines that the reference transport block is the first transport block or the second transport block. For another example, when the MCS information corresponding to the second transport block is the same as the preset MCS information, the terminal device determines that the reference transport block is the first transport block or the second transport block. For still another example, when the MCS information corresponding to the first transport block is the same as the preset MCS information, and the MCS information corresponding to the second transport block is different from the preset MCS information, the terminal device determines that the reference transport block is the first transport block or the second transport block. For yet another example, when the MCS information corresponding to the first transport block is different from the preset MCS information, and the MCS information corresponding to the second transport block is the same as the preset MCS information, the terminal device determines that the reference transport block is the first transport block or the second transport block. According to this solution, the terminal device determines the reference transport block based on the preset MCS information, the MCS information corresponding to the first transport block, and/or the MCS corresponding to the second transport block, so that the terminal device can determine the reference transport block based on the MCS information sent by the network device, and the network device does not need to additionally configure information used to indicate the reference transport block. Therefore, signaling overheads between the terminal device and the network device are reduced, and this is more applicable to ultra-reliable and low-latency communication URLLC in an NR system.

In another possible design, when the indication information includes the MCS information corresponding to the first transport block and the MCS information corresponding to the second transport block, the step B11 may specifically include: Step B41: The terminal device determines, based on the MCS information corresponding to the first transport block, a reference TBS corresponding to the first transport block. Step B42: The terminal device determines, based on the MCS information corresponding to the second transport block, a reference TBS corresponding to the second transport block. Step B43: The terminal device determines the reference transport block based on the reference TBS corresponding to the first transport block and the reference TBS corresponding to the second transport block. For example, the terminal device determines, from the first transport block and the second transport block, a transport block corresponding to a relatively large reference TBS as the reference transport block. For another example, the terminal device determines, from the first transport block and the second transport block, a transport block corresponding to a relatively small reference TBS as the reference transport block. For still another example, for the terminal device, when the reference TBS corresponding to the first transport block is equal to the reference TBS corresponding to the second transport block, the terminal device determines either of the first transport block and the second transport block as the reference transport block. According to this solution, the terminal device determines the reference transport block based on the TBS of the first transport block and the TBS of the second transport block, and the terminal device selects, based on a current network environment, a transport block corresponding to a relatively large reference TBS as the reference transport block, or selects, based on a current network environment, a transport block corresponding to a relatively small reference TBS as the reference transport block. Therefore, a reference TBS of the reference transport block that is determined by the terminal device better conforms to the current network environment.

In another possible design, that the terminal device obtains a target transport block size TBS includes three implementations.

Implementation 1: Both the network device and the terminal device store correspondences between different preset TBSs and indication field information in higher layer signaling. The terminal device receives higher layer signaling sent by the network device, and the terminal device may parse the higher layer signaling to obtain indication field information in the higher layer signaling, and determine a corresponding preset TBS based on a stored correspondence. The terminal device determines the preset TBS corresponding to the indication field information in the higher layer signaling as the target TBS. It can be learned that the target TBS is one of at least one preset TBS predefined by the network device and the terminal device.

Implementation 2: Both the network device and the terminal device store correspondences between different bit status values of a bit field included in the DCI and different preset TBSs. The terminal device receives DCI sent by the network device, and the terminal device may parse the DCI to obtain a bit status value in the DCI, and determine a corresponding preset TBS based on a stored correspondence. The terminal device determines the preset TBS corresponding to the bit status value included in the DCI as the target TBS.

Implementation 3: The network device may send at least one preset TBS to the terminal device through higher layer signaling, and in a process of performing the step B, the network device may indicate the target TBS through the DCI.

According to the foregoing three solutions in which the terminal device obtains the target transport block size TBS, both the network device and the terminal device store at least one preset TBS, and the terminal device may determine the target TBS from the at least one preset TBS. It can be learned that, the terminal device does not need to perform calculation on the reference TBS of the first transport block and the reference TBS of the second transport block, and this is more applicable to ultra-reliable and low-latency communication URLLC in an NR system.

In another possible design, that the terminal device obtains a target transport block size TBS includes: The terminal device determines preset MCS information, and determines the target TBS based on the preset MCS. For example, when the terminal device determines that MCS information of the first transport block is the same as the preset MCS information, the terminal device determines that the target TBS is equal to a preset TBS. For another example, when the terminal device determines that MCS information of the second transport block is the same as the preset MCS information, the terminal device determines that the target TBS is equal to the preset TBS. For still another example, when the terminal device determines that MCS information of the first transport block is the same as the preset MCS information, and the terminal device determines that MCS information of the second transport block is the same as the preset MCS information, the terminal device determines that the target TBS is equal to the preset TBS. The preset TBS is predefined and/or is configured by using higher layer signaling. According to this solution, both the network device and the terminal device store at least one preset TBS, and the terminal device determines the target TBS from the at least one preset TBS based on the MCS information corresponding to the first transport block and/or the MCS information corresponding to the second transport block. It can be learned that, the terminal device does not need to perform calculation on the reference TBS of the first transport block and the reference TBS of the second transport block, and this is more applicable to ultra-reliable and low-latency communication URLLC in an NR system.

In another possible design, the method further includes: Step D: The terminal device sends notification information, where the notification information is used to notify the network device that the terminal device has a capability of receiving a first transport block and a second transport block that correspond to a same TBS. For example, the notification information may be first notification information, and the first notification information is used to notify the network device that the terminal device has the capability of receiving the first transport block and the second transport block that correspond to the same TBS. Specifically, optionally, the first notification information is used to notify the network device that the terminal device has a capability of simultaneously receiving the first transport block and the second transport block that correspond to the same TBS, and the simultaneous reception may be joint reception. For another example, the notification information may be third notification information. The third notification information is used to notify the network device that the terminal device has a capability of supporting reception of two transport blocks sent by a plurality of TRPs in non-ideal backhaul. The third notification information is used to notify the network device that the terminal device has a capability of supporting simultaneous reception of the two transport blocks sent by the plurality of TRPs in the non-ideal backhaul. According to this solution, the terminal device may report, to the network device through the notification information, that the terminal device has the capability of receiving the first transport block and the second transport block that correspond to the same TBS. Therefore, when the network device determines that the terminal device has the capability of receiving the first transport block and the second transport block that correspond to the same TBS, the network device sends the first transport block and the second transport block that are used to send same data information to the terminal device, thereby ensuring reliability of receiving the data information by the terminal device, and avoiding a case in which the terminal fails to receive the first transport block and the second transport block for the terminal device does not have the capability of receiving the first transport block and the second transport block that correspond to the same TBS.

In another possible design, the method further includes: Step E: The terminal device receives configuration information, where the configuration information is used to configure the terminal device to be capable of receiving the first transport block and the second transport block that correspond to the same TBS. For example, the configuration information may be first configuration information, and the first configuration information is used to configure the terminal device to be capable of receiving the first transport block and the second transport block that correspond to the same TBS. The first configuration information is used to configure the terminal device to be capable of simultaneously receiving the first transport block and the second transport block that correspond to the same TBS, and the simultaneous reception may be joint reception. For another example, the configuration information may be third configuration information. The third configuration information is used to configure the terminal device to be capable of receiving two transport blocks sent by a plurality of TRPs in non-ideal backhaul. The third configuration information is used to configure the terminal device to be capable of simultaneously receiving the two transport blocks sent by the plurality of TRPs in the non-ideal backhaul. According to this aspect, the terminal device performs configuration based on the configuration information sent by the network device, so that the terminal device can receive the first transport block and the second transport block that correspond to the same TBS, thereby avoiding a case in which the terminal fails to receive the first transport block and the second transport block.

In another possible design, the method further includes: Step F1: The terminal device performs a linear OR operation on hybrid automatic repeat request HARQ information corresponding to the first transport block and HARQ information corresponding to the second transport block, to obtain target HARQ information. Step F2: The terminal device sends the target HARQ information based on the DCI. Specifically, after the terminal device decodes the first transport block and the second transport block, the terminal device needs to feed back, to the network device, first HARQ information corresponding to the first transport block and second HARQ information corresponding to the second transport block. Before the feedback, the terminal device may perform the linear OR operation on the first HARQ information and the second HARQ information to obtain the target HARQ information, where the target HARQ information is used to indicate whether the terminal device successfully receives the first transport block and/or the second transport block.

A first manner of performing the linear OR operation is as follows: The terminal device determines that at least one of the first transport block and the second transport block is successfully decoded, and after performing the linear OR operation, the terminal device determines that the target HARQ information is an ACK. After the terminal device determines that each of the first transport block and the second transport block fails to be decoded, and after performing the linear OR operation, the terminal device determines that the target HARQ information is a NACK. A second manner of performing the linear OR operation is as follows: The terminal device determines that both the first transport block and the second transport block are divided into at least one code block group, each code block group includes at least one code block into which the transport block is divided, and the first transport block and the second transport block correspond to a same code block group, and/or same code block groups corresponding to the first transport block and the second transport block correspond to a same code block.

For example, the terminal device determines a first code block group from the at least one code block group included in the first transport block, and determines a second code block group from the at least one code block group included in the second transport block. If the first code block group is the same as the second code block group, the terminal device determines that there is at least one ACK in feedback information corresponding to the first code block group and feedback information corresponding to the second code block group, so that the terminal device determines, after performing the linear OR operation, that the feedback information corresponding to the first code block group and the feedback information corresponding to the second code block group in the target HARQ information are ACKs. If the terminal device determines that all of the feedback information corresponding to the first code block group and the feedback information corresponding to the second code block group are NACKs, the terminal device determines, after performing the linear OR operation, that the feedback information corresponding to the first code block group and the feedback information corresponding to the second code block group in the target HARQ information are NACKs.

According to this aspect, the terminal device may obtain the target HARQ information by performing the linear OR operation on the first HARQ information corresponding to the first transport block and the second HARQ information corresponding to the second transport block, and the terminal device may feed back one piece of target HARQ information to the network device, so that the network device determines whether the first transport block and the second transport block are successfully decoded by the terminal device, thereby effectively reducing signaling overheads between the network device and the terminal device.

In another possible design, the method further includes: Step G11: The terminal device determines that the first transport block is a transport block corresponding to initial transmission, and the second transport block is a transport block corresponding to retransmission. The terminal device determines that the first transport block is the transport block corresponding to the initial transmission, and the second transport block is the transport block corresponding to the retransmission. When the terminal device fails to decode the first transport block, and/or the terminal device fails to decode the second transport block, the terminal device combines information corresponding to the first transport block and information corresponding to the second transport block, to obtain combined information, and the terminal device decodes the combined information.

In another possible design, the method further includes: Step G12: The terminal device determines that the second transport block is a transport block corresponding to initial transmission, and the first transport block is a transport block corresponding to retransmission. For example, the terminal device determines that the second transport block is the transport block corresponding to the initial transmission, and the first transport block is the transport block corresponding to the retransmission. When the terminal device fails to decode the first transport block, and/or the terminal device fails to decode the second transport block, the terminal device combines information corresponding to the first transport block and information corresponding to the second transport block, to obtain combined information, and the terminal device decodes the combined information. An advantage of using this decoding manner lies in that, by determining the transport block corresponding to the initial transmission and determining the transport block corresponding to the retransmission, retransmission decoding may be performed after initial transmission decoding fails, thereby improving a decoding success rate.

In another possible design, the method further includes: Step G21: The terminal device combines information corresponding to the first transport block and information corresponding to the second transport block, to obtain combined information. Step G22: The terminal device decodes the combined information. According to this solution, the first transport block and the second transport block send same data information, and the terminal device may perform soft-bit combination on soft-bit information corresponding to the first transport block and soft-bit information corresponding to the second transport block. The terminal device superposes the soft-bit information corresponding to the first transport block and the soft-bit information corresponding to the second transport block, to increase signal power. The terminal device demodulates the superposed soft-bit information instead of separately demodulating a single transport block, and this greatly improves a decoding success rate.

According to a second aspect, an embodiment of the present invention provides an information transmission method. The method includes: Step A: A network device sends downlink control information DCI. The DCI is used to indicate a first transport block and a second transport block. Step B: The network device sends the first transport block and the second transport block based on the DCI. For the first transport block and the second transport block, refer to the first aspect of the embodiments of the present invention. Details are not described again. According to the information transmission method shown in this aspect, the network device sends, to a terminal device, the first transport block and the second transport block that carry same data information, thereby improving reliability of the data information, and being more applicable to ultra-reliable and low-latency communication URLLC in an NR system.

In a possible design, the method further includes: Step C: The network device sends indication information, where the indication information is used to indicate a reference transport block, and the reference transport block is one of the first transport block and the second transport block; and the indication information includes at least one of the following: higher layer signaling used to indicate the reference transport block, modulation and coding scheme MCS information corresponding to the first transport block, MCS information corresponding to the second transport block, or information that is included in the DCI and that is used to indicate the reference transport block. For specific description of the indication information, refer to the first aspect of the embodiments of the present invention. Details are not described again. According to this solution, the network device may indicate the reference transport block to the terminal device through the indication information. Different indication information may enable the terminal device to determine the reference transport block in different manners, so that the method in this aspect can adapt to different application scenarios and be more applicable to ultra-reliable and low-latency communication URLLC in an NR system.

In another possible design, the indication information includes the MCS information corresponding to the first transport block and/or the MCS information corresponding to the second transport block, and the indication information is further used to indicate that the MCS information corresponding to the first transport block and/or the MCS information corresponding to the second transport block are/is the same as preset MCS information.

In another possible design, the indication information includes the MCS information corresponding to the first transport block and the MCS information corresponding to the second transport block, the MCS information corresponding to the first transport block is used to indicate a reference TBS corresponding to the first transport block, the MCS information corresponding to the second transport block is used to indicate a reference TBS corresponding to the second transport block, and the reference TBS corresponding to the first transport block and the reference TBS corresponding to the second transport block are used to indicate the reference transport block.

In another possible design, the method further includes: Step D1: The network device sends higher layer signaling, where the higher layer signaling is used to indicate the target TBS, and the target TBS is one of at least one predefined preset TBS; or the method further includes: Step D2: The network device sends higher layer signaling, where the higher layer signaling is used to indicate at least one preset TBS, the DCI is used to indicate the target TBS, and the target TBS is one of the at least one preset TBS. For specific description of the higher layer signaling shown in this aspect, refer to the first aspect of the embodiments of the present invention. Details are not described again. According to this solution, both the network device and the terminal device store the at least one preset TBS, and the network device may indicate the target TBS, to the terminal device, from the at least one preset TBS through the higher layer signaling. Therefore, the terminal device does not need to perform calculation on the reference TBS of the first transport block and the reference TBS of the second transport block, and is more applicable to ultra-reliable and low-latency communication URLLC in an NR system.

In another possible design, the DCI is further used to indicate the target TBS, and the target TBS is one of at least one predefined preset TBS. According to this solution, both the network device and the terminal device store the at least one preset TBS, and the network device may indicate the target TBS, to the terminal device, from the at least one preset TBS through the DCI. Therefore, the terminal device does not need to perform calculation on the reference TBS of the first transport block and the reference TBS of the second transport block, and is more applicable to ultra-reliable and low-latency communication URLLC in an NR system.

In another possible design, MCS information of the first transport block is the same as preset MCS information, and the target TBS is equal to a preset TBS; and/or MCS information of the second transport block is the same as the preset MCS information, and the target TBS is equal to the preset TBS, where the preset TBS is predefined and/or is indicated by higher layer signaling that is sent by the network device.

In another possible design, the method further includes: Step E: The network device receives notification information sent by the terminal device, where the notification information is used to notify the network device that the terminal device has a capability of receiving a first transport block and a second transport block that correspond to a same TBS. For specific description of the notification information, refer to the first aspect of the embodiments of the present invention. Details are not described again.

In another possible design, the method further includes: Step F: The network device sends configuration information to the terminal device, where the configuration information is used to configure the terminal device to be capable of receiving the first transport block and the second transport block that correspond to the same TBS. For specific description of the configuration information, refer to the first aspect of the embodiments of the present invention. Details are not described again.

In another possible design, the method further includes: Step G: The network device receives target HARQ information sent by the terminal device, where the target HARQ information is used to indicate whether the terminal device successfully receives the first transport block and/or the second transport block. For specific description of the target HARQ information, refer to the first aspect of the embodiments of the present invention. Details are not described again.

According to a third aspect, an embodiment of the present invention provides an information transmission apparatus. The apparatus has a function of implementing behavior of the terminal device in the foregoing method design. The function may be implemented by hardware or may be implemented by hardware executing corresponding software. The hardware or the software includes one or more modules corresponding to the foregoing function. The module may be software and/or hardware.

In a possible design, a structure of the apparatus includes a receiver and a processor. The receiver is configured to: support the apparatus in receiving downlink control information DCI sent by the foregoing network device to the apparatus, where the DCI is used to indicate a first transport block and a second transport block; and receive the first transport block and/or the second transport block based on the DCI received by the receiving module and the target TBS obtained by the processing module. The processor is configured to obtain a target transport block size TBS, where each of a TBS that corresponds to the first transport block indicated by the DCI received by the receiving module and a TBS that corresponds to the second transport block indicated by the DCI received by the receiving module is the target TBS.

According to a fourth aspect, an information transmission apparatus is provided. The apparatus has a function of implementing behavior of the network device in the foregoing method design. The function may be implemented by hardware, or may be implemented by hardware executing corresponding software. The hardware or the software includes one or more modules corresponding to the foregoing function.

In a possible design, a structure of the apparatus includes a transmitter and a memory. The transmitter is configured to send downlink control information DCI, where the DCI is used to indicate a first transport block and a second transport block, and each of a transport block size TBS corresponding to the first transport block and a TBS corresponding to the second transport block is a target TBS; and is configured to send the first transport block and the second transport block based on the DCI sent by the sending module. The memory is configured to be coupled to a processor, and stores a program instruction and data that are necessary for the apparatus.

According to a fifth aspect, a computer non-transient storage medium is provided, including an instruction. When the instruction is run on a terminal device, the terminal device is enabled to perform the method according to any one of the first aspect or the possible implementations of the first aspect.

According to a sixth aspect, a computer non-transient storage medium is provided, including an instruction. When the instruction is run on a network device, the network device is enabled to perform the method according to any one of the second aspect or the possible implementations of the second aspect.

According to a seventh aspect, a communications system is provided, including a terminal device and a network device. The terminal device and the network device may communicate with each other.

The terminal device is configured to perform the method according to any one of the first aspect or the possible implementations of the first aspect.

The network device is configured to perform the method according to any one of the second aspect or the possible implementations of the second aspect.

### BRIEF DESCRIPTION OF DRAWINGS

FIG. 1 is a schematic structural diagram of an embodiment of a communications system according to the present invention;
FIG. 2 is a schematic structural diagram of another embodiment of a communications system according to the present invention;
FIG. 3 is a flowchart of steps of an embodiment of an information transmission method according to the present invention;
FIG. 4 is an example diagram of information transmission according to the present invention;
FIG. 5 is a flowchart of steps of another embodiment of an information transmission method according to the present invention;
FIG. 6 is an example diagram of a scenario to which an information transmission method is applied according to the present invention;
FIG. 7 is a flowchart of steps of another embodiment of an information transmission method according to the present invention;
FIG. 8 is a schematic structural diagram of an application scenario of a communications system according to the present invention;
FIG. 9 is a schematic structural diagram of another application scenario of a communications system according to the present invention;
FIG. 10A and FIG. 10B are a flowchart of steps in an application scenario of an information transmission method according to the present invention;
FIG. 11 is a schematic structural diagram of an embodiment of an information transmission apparatus according to the present invention;
FIG. 12 is a schematic structural diagram of another embodiment of an information transmission apparatus according to the present invention; and
FIG. 13 is a schematic structural diagram of another embodiment of an information transmission apparatus according to the present invention.

### DESCRIPTION OF EMBODIMENTS

An embodiment of the present invention provides an information transmission method that can implement reliable transmission. To better understand the information transmission method in this embodiment, the following first describes, by using an example, a specific structure of a communications system used to implement the information transmission method.

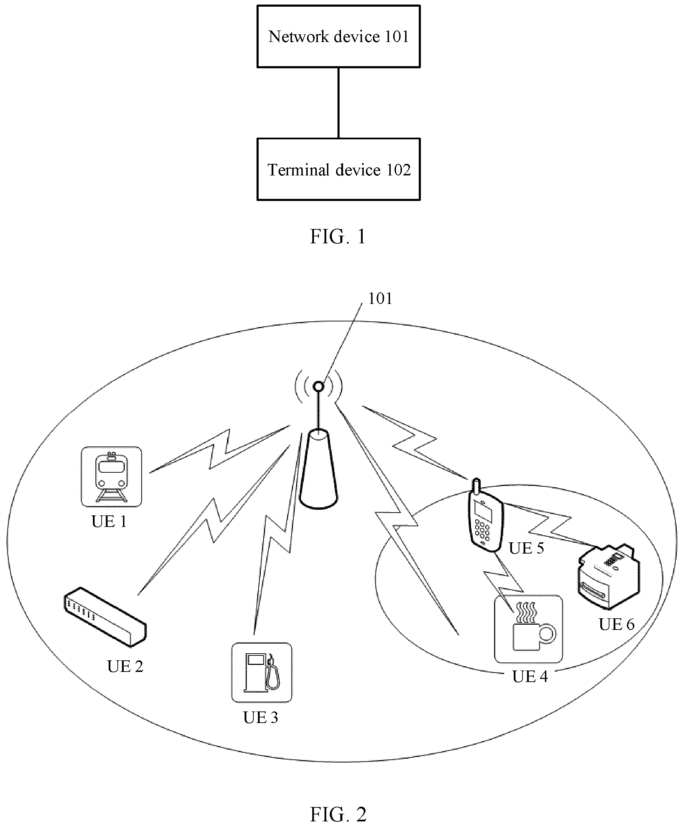

Referring to FIG. 1, the communications system in this embodiment is described by using a 5G NR system as an example. The communications system in this embodiment includes a network device 101 and a terminal device 102. The following first describes the NR system.

Mobile communications technologies have profoundly changed life of people, and pursuit of people for a mobile communications technology having higher performance has never ceased. To cope with explosive growth of mobile data traffic in the future, massive mobile communications device connections, and various emerging new services and application scenarios, a fifth generation (the fifth generation, 5G) mobile communications system emerges. The international telecommunication union (international telecommunication union, ITU) defines three types of application scenarios for 5G and a future mobile communications system: enhanced mobile broadband (enhanced mobile broadband, eMBB), ultra-reliable and low-latency communication (ultra reliable and low latency communications, URLLC), and massive machine-type communications (massive machine type communications, mMTC).

Typical URLLC services include tactile interaction applications such as wireless control in an industrial manufacturing or production process, motion control and remote repair of a self-driving car and an unmanned aerial vehicle, and remote surgery. These services are mainly characterized by requirements for ultra-high reliability and a low latency, a relatively small data transmission amount, and burstiness. Typical mMTC services include smart grid power distribution automation, a smart city, and the like. These services are mainly characterized by a huge quantity of web-connected devices, a relatively small data transmission volume, and insensitivity of data to a transmission latency. mMTC terminals need to satisfy requirements for low costs and a very long standby time. Typical eMBB services include an ultra-high definition video, augmented reality (augmented reality, AR), virtual reality (virtual reality, VR), or the like. These services are mainly characterized by a large data transmission volume and a very high transmission rate.

In a wireless communications system, a reference signal needs to be transmitted during uplink data transmission (sent by the terminal device 102 to the network device 101) or downlink data transmission (sent by the network device 101 to the terminal device 102). This is because before performing data decoding, a receive end (a receive end in uplink data transmission is the network device 101, and a receive end in downlink data transmission is the terminal device 102) needs to perform channel estimation on a channel by using the reference signal, and further remove, by using a result of the channel estimation, impact of a spatial channel on data, to perform decoding.

The NR system supports various time scheduling units, and a length of the time scheduling unit may be one or more time domain symbols. A symbol is an orthogonal frequency division multiplexing (orthogonal frequency division multiplexing) symbol. The OFDM symbol may use transform precoding (transform precoding), or may not use transform precoding. If transform precoding is used, the OFDM symbol may also be referred to a single carrier-frequency division multiplexing (single carrier-frequency division multiplexing, SC-FDM) symbol. The NR system includes slots (slot), and one slot includes 14 symbols. The NR system supports a plurality of subcarrier spacings. Different subcarrier spacings correspond to different time lengths of a slot. For example, when a subcarrier spacing is 15 kilohertz (kHz), a time length corresponding to one slot is 1 millisecond (ms). For example, when a subcarrier spacing is 30 kHz, a time length corresponding to one slot is 0.5 ms. For example, when a subcarrier spacing is 60 kHz, a time length corresponding to one slot is 0.25 ms. For example, when a subcarrier spacing is 120 kHz, a time length corresponding to one slot is 0.125 ms. Because a quantity of symbols in one slot is always 14, it may be understood that a time length corresponding to the symbol also varies with the subcarrier spacing.

It should be noted that the communications system in this embodiment may also be used in another communications system, for example, a 4G fourth generation mobile communication technology (the 4th generation mobile communication technology, 4G) or a third generation mobile communication technology (3rd-generation). As long as a first entity in the communications system needs to send transmission direction indication information, a second entity needs to receive the indication information, so that the second entity determines, based on the indication information, a transmission direction within a specific time period. The first entity serves as the network device 101 in this embodiment, and the second entity serves as the terminal device 102 in this embodiment.

The following specifically describes the network device 101 shown in this embodiment.

The network device 101 is an entity configured to transmit or receive a signal on a network side. To be specific, the network device 101 is a device configured to communicate with the terminal device 102. The network device 101 may be a 5G base station (gNodeB, gNB), or the network device 101 may be an access point (access point, AP) in a wireless local area network (wireless local area network, WLAN), a base transceiver station (base transceiver station, BTS) in a global system for mobile communications (global system for mobile communication, GSM) or code division multiple access (code division multiple access, CDMA), or a NodeB (NodeB, NB) in wideband code division multiple access (wideband code division multiple access, WCDMA), or an evolved NodeB (evolved NodeB, eNB or eNodeB) in long term evolution (long term evolution, LTE), or a relay station or an access point, or a vehicle-mounted device, a wearable device, and a network device in a future 5G network or a network device in a future evolved public land mobile network (public land mobile network, PLMN) network, or a next-generation NodeB (new generation NodeB, gNodeB) in an NR system.

Specifically, in this embodiment, the network device 101 serves a cell. The terminal device 102 communicates with the network device 101 on a transmission resource (for example, a frequency domain resource or a spectrum resource) used for the cell. The cell may be a cell corresponding to the network device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-rate data transmission service.

The following specifically describes the terminal device 102 shown in this embodiment.

The terminal device 102 is an entity configured to receive or transmit a signal on a user side, for example, a mobile phone (gUE). The terminal device 102 may also be referred to as a terminal device (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device 102 may be a station (station, ST) in a wireless local area network (wireless local area network, WLAN), and may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device, and a next-generation communications system, for example, a terminal device in a 5G network, a terminal device in a PLMN network, or a terminal device in an NR communications system. By way of example and not limitation, in this embodiment of the present invention, the terminal device may alternatively be a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that can be directly worn on a body or integrated into clothes or an accessory of a user. The wearable device is not only a hardware device, but is used to implement powerful functions through software support, data exchange, and cloud interaction. Generalized wearable intelligent devices include full-featured and large-size devices that can implement complete or partial functions without depending on smartphones, such as smartwatches or smart glasses, and devices that focus on only one type of application and need to work with other devices such as smartphones, such as various smart bands or smart jewelry for monitoring physical signs.

A specific quantity of the network devices 101 and a specific quantity of the terminal devices 102 are not limited in this embodiment. FIG. 2 is used as an example. In FIG. 2, that there is one network device 101 and there are six terminal devices (that is, UE 1, UE 2, UE 3, UE 4, UE 5, and UE 6) is used as an example.

A communications system shown in FIG. 2 includes the network device 101, and the communications system further includes the UE 1 to the UE 6. In the communications system, the UE 1 to the UE 6 may send uplink data to the network device 101, and the network device 101 needs to receive the uplink data sent by the UE 1 to the UE 6. In addition, the network device 101 may further send downlink data to the UE 1 to the UE 6, and the UE 1 to the UE 6 need to receive the downlink data sent by the network device 101.

For example, as shown in FIG. 2, the UE 4 to the UE 6 may also form a communications system. In the communications system, the network device 101 may send downlink data to the UE 1, the UE 2, the UE 5, and the like. The UE 5 may also send downlink data to the UE 4 and the UE 6.

The network device transmits at least two transport blocks through PDSCH. However, to improve reliability of data information, the network device may carry same data information in the at least two transport blocks, that is, the at least two transport blocks separately carry the same data information. However, because the at least two transport blocks correspond to different antenna ports, namely, different transmission space, and/or the at least two transport blocks correspond to different time-frequency resources, namely, different transmission resources, and/or the at least two transport blocks are from different channel environments, namely, transport blocks sent by a plurality of transmission reception points (transmit receive point, TRP), the at least two transport blocks correspond to different modulation and coding schemes, and/or the at least two transport blocks correspond to different time-frequency domain resources, or the like. Consequently, TBSs calculated by the terminal device for the at least two transport blocks are different. When the terminal device calculates different TBSs, the terminal device cannot determine a real TBS corresponding to currently transmitted data information. Consequently, the terminal device cannot receive the data information, and reliability of the data information cannot be improved. Therefore, to resolve this problem, when the at least two transport blocks transmit the same data information, how to determine TBS values corresponding to the at least two transport blocks is an urgent problem to be resolved.

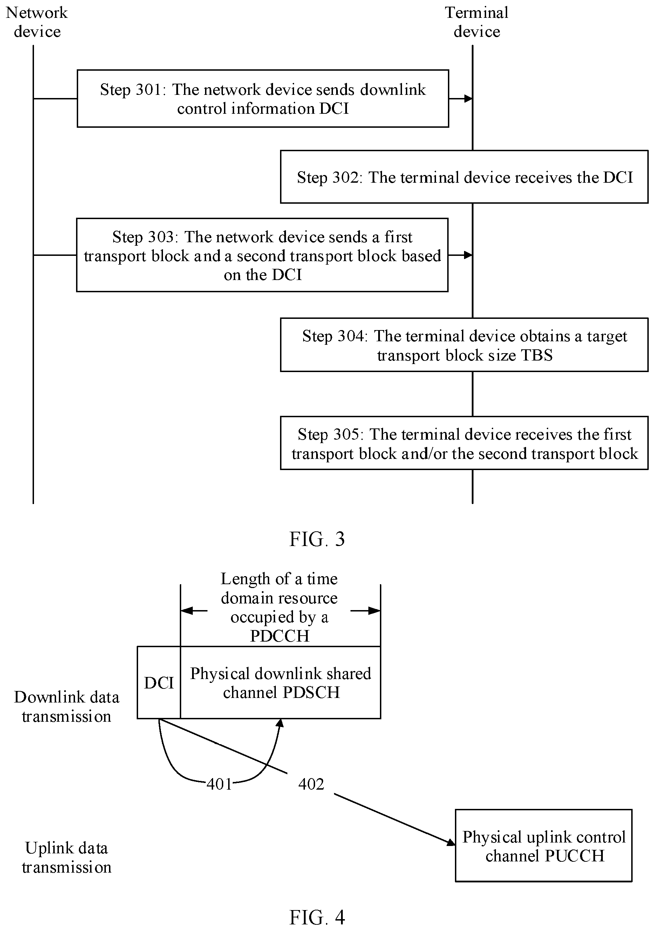

Based on the specific structure of the communications system shown above, the following describes a specific execution process of the information transmission method shown in this embodiment with reference to FIG. 3.

Step 301: A network device sends downlink control information DCI.

The following specifically describes step 301 in this embodiment with reference to FIG. 4.

As shown in FIG. 4, for downlink data transmission, if the downlink data transmission is based on dynamic scheduling, the network device sends downlink control information (downlink control information, DCI) on a physical downlink control channel (physical downlink control channel, PDCCH), where the DCI is used to indicate transmission information of physical downlink shared channel (Physical Downlink Shared Channel, PDSCH), namely, transmission information of at least two transport blocks. One PDSCH corresponds to at least one transport block.

Specifically, the transmission information includes information such as a time-frequency resource occupied by the PDSCH and a modulation and coding scheme. After receiving the DCI, a terminal device may determine, based on the DCI, specific time-frequency resources and a specific modulation and coding scheme that are used to receive the at least two transport blocks.

The network device in this embodiment indicates, through one or more pieces of DCI, the terminal device to receive the at least two transport blocks sent by the network device. The network device improves transmission reliability of data information through at least two transport blocks carrying same data information. For example, the method for determining TBS values corresponding to at least two transport blocks in this embodiment is used in a case in which the at least two transport blocks correspond to a same codeword (codeword, CW) or different codewords, and/or time-frequency resources in which the at least two transport blocks are located completely or partially overlap.

In this embodiment, an example in which the network device indicates a first transport block and a second transport block to the terminal device through the DCI, and the first transport block and the second transport block carry same data information is used for description. FIG. 4 is used as an example. The network device indicates the first transport block and the second transport block to the terminal device through one piece of DCI (as shown by an arrow 401 in FIG. 4), and the first transport block and the second transport block send the same data information. In another example, alternatively, the network device may send two pieces of DCI to the terminal device, where one piece of DCI is used to indicate the first transport block, and the other piece of DCI is used to indicate the second transport block.

The network device further indicates a physical uplink control channel (physical uplink control channel, PUCCH) to the terminal device through the DCI. For details, refer to an arrow 402 shown in FIG. 4. The terminal device sends uplink information, for example, hybrid automatic repeat request (hybrid automatic repeat request, HARQ) information, on the PUCCH or a PUSCH indicated by the DCI.

The network device sends the same data information by using the first transport block and the second transport block, that is, a TBS corresponding to the first transport block is the same as a TBS corresponding to the second transport block. Specifically, the DCI shown in this embodiment is used to indicate transmission information of the first transport block and the second transport block, and the transmission information includes information such as a time-frequency resource in which the first transport block and the second transport block are located. Specific content of the transmission information indicated by the DCI is not limited in this embodiment, provided that the terminal device can receive the first transport block and/or the second transport block based on the transmission information. This falls within the protection scope of this application.

Step 302: The terminal device receives the DCI.

Step 303: The network device sends the first transport block and the second transport block based on the DCI.

The network device sends the same data information to the terminal device based on an indication of the DCI by using the first transport block and the second transport block.

Step 304: The terminal device obtains a target transport block size TBS.

A specific manner of obtaining the target TBS by the terminal device is not limited in this embodiment, provided that the terminal device determines that each of the TBS of the first transport block and the TBS of the second transport block is the target TBS. A specific value of the target TBS is not limited in this embodiment, and details are described in the following embodiments.

For example, the target TBS is indicated by the network device to the terminal device. The terminal device determines, based on the target TBS indicated by the network device, that each of the TBS of the first transport block and the TBS of the second transport block is equal to the target TBS. For example, the network device indicates the target TBS to the terminal device through higher layer signaling. For another example, the network device indicates the target TBS to the terminal device through the DCI.

The higher layer signaling may be signaling sent by the network device through a higher-layer protocol layer, and the higher-layer protocol layer is a protocol layer above a physical layer. The higher-layer protocol layer may be specifically at least one of the following protocol layers: a medium access control (medium access control, MAC) layer, a radio link control (radio link control, RLC) layer, a packet data convergence protocol (packet data convergence protocol, PDCP) layer, a radio resource control (radio resource control, RRC) layer, and a non-access stratum (non-access stratum, NAS).

For example, the terminal device determines that the target TBS is equal to the TBS of the first transport block, or the terminal device determines that the target TBS is equal to the TBS of the second transport block.

For example, the terminal device may prestore the target TBS. In a process in which the terminal device performs the information transmission method described in this embodiment, when obtaining the target TBS, the terminal device may directly invoke the target TBS stored in the terminal device.

A time sequence of performing step 303 and step 304 shown in this embodiment is not limited.

Step 305: The terminal device receives the first transport block and/or the second transport block.

As shown in the foregoing analysis, the network device may separately send the same data information to the terminal device by using the first transport block and the second transport block. Because the first transport block and the second transport block correspond to different reference signals, or the first transport block and the second transport block are sent by different TRPs, in other words, the first transport block and the second transport block correspond to different spatial channels, the terminal device receives the same data information in different space, thereby improving reliability of receiving the data information by the terminal device. Alternatively, because the first transport block and the second transport block are transmitted on different time-frequency resources, the terminal device receives the same data information on different time-frequency resources, thereby improving reliability of receiving the data information by the terminal device.

For example, the terminal device determines that the first transport block and the second transport block carry the same data information. The same data information may be considered as data corresponding to a same process number, and/or data corresponding to a same logical channel group. Specifically, for example, the network device sends indication information to the terminal device through the DCI, where the indication information is used to indicate that at least two transport blocks send same data information. For another example, the network device sends configuration information to the terminal device through the higher layer signaling, where the configuration information is used to indicate that at least two transport blocks send same data information. For another example, in a predefined manner, the network device and the terminal device determine that at least two transport blocks transmit same data information.

For example, the first transport block and the second transport block carry the same data information, and the terminal device receives the data information by using the first transport block and/or the second transport block. For example, the terminal device receives the first transport block (for example, decodes the first transport block) based on the DCI and the target TBS. Further optionally, the terminal device receives the second transport block (for example, decodes the second transport block) based on the DCI and the target TBS. It may be understood that if the terminal device successfully decodes either of the first transport block and the second transport block, the terminal device may determine that the data information is successfully received. It may be understood that if the terminal device determines that the first transport block and the second transport block carry different data information, the terminal device separately receives different data information by using the first transport block and the second transport block. A specific receiving manner is the same as that described in the background.

For example, to improve a success rate of receiving the data information, the terminal device jointly decodes the first transport block and the second transport block based on the DCI and the target TBS. The terminal device combines data information corresponding to the first transport block and data information corresponding to the second transport block to obtain combined data information, and the terminal device decodes the combined data information. Compared with decoding of a single transport block, joint decoding can improve the success rate of receiving the data information by the terminal device.

To better understand beneficial effects of the information transmission method shown in this embodiment, the following provides description with reference to a specific example.

According to a method shown in the current technology, the terminal device needs to calculate, based on the DCI, a TBS corresponding to each transport block, and then receive the transport block based on the TBS corresponding to each transport block. For example, the terminal device calculates, through the DCI, that the TBS corresponding to the first transport block is 100 bits, and the TBS corresponding to the second transport block is 200 bits. The terminal device needs to decode the first transport block based on the 100-bit TBS, and decode the second transport block by using the 200-bit TBS. However, as shown in the foregoing steps in this embodiment, the network device sends, to the terminal device, the first transport block and the second transport block that transmit the same data information, where both a TBS of the first transport block and a TBS of the second transport block are equal to a TBS corresponding to one of the transport blocks, for example, 200 bits, or both a TBS of the first transport block and a TBS of the second transport block are equal to a preconfigured or predefined TBS, for example, 300 bits.

Because different transport blocks correspond to different spatial channel environments, so that time-frequency domain resources in which different transport blocks are located and/or corresponding modulation and coding schemes are different. Consequently, the TBS of the first transport block and the TBS of the second transport block are different. However, when the terminal device uses the method in this application, the terminal device does not need to separately calculate the TBS of the first transport block and the TBS of the second transport block, and only needs to obtain the target TBS. For example, the target TBS is 200 bits. Based on the 200-bit TBS, the terminal device decodes the first transport block and/or the second transport block. It can be learned that according to the information transmission method shown in this embodiment, the terminal device decodes, based on the received DCI and the target TBS, at least one transport block in the at least two transport blocks sent by the network device, thereby improving a success rate of receiving data information by the terminal device, and further effectively improving data transmission reliability. In addition, compared with the current technology, the method in this embodiment is more applicable to ultra-reliable and low-latency communication URLLC in an NR system.

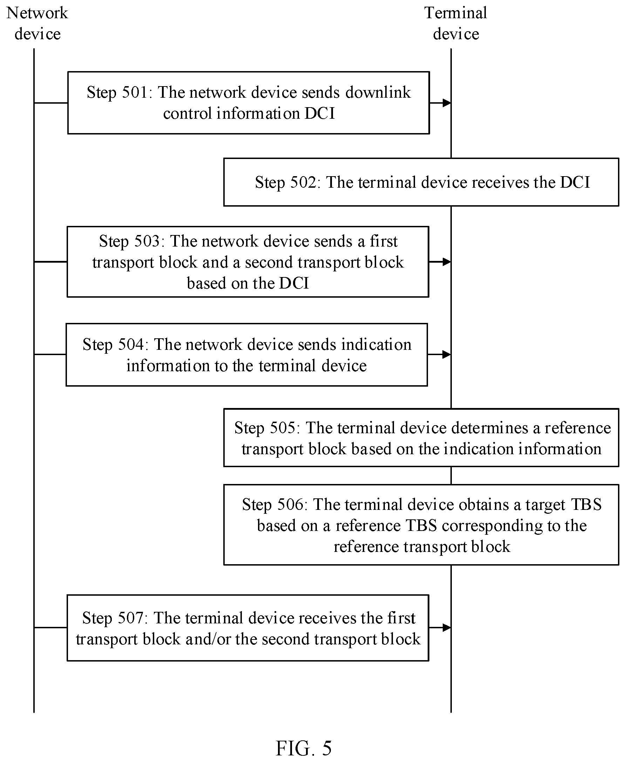

Based on the information transmission method shown in FIG. 3, the following describes, with reference to FIG. 5, an example of a specific execution process of the information transmission method shown in this embodiment. First, it should be noted that a difference between the information transmission method shown in FIG. 3 and the information transmission method shown in FIG. 5 lies in that: The target TBS determined by the terminal device is the TBS corresponding to the first transport block or the TBS corresponding to the second transport block. For a specific execution process, refer to the following description.

Step 501: A network device sends downlink control information DCI.

Step 502: A terminal device receives the DCI.

Step 503: The network device sends the first transport block and the second transport block based on the DCI.

For a specific execution process of steps 501 to 503 in this embodiment, refer to steps 301 to 303 in FIG. 3 for details. The specific execution process is not described in this embodiment again.

Step 504: The network device sends indication information to the terminal device.

Step 505: The terminal device determines a reference transport block based on the indication information.

For better understanding, the following provides description with reference to step 504 and step 505. Specifically, the reference transport block in this embodiment is one of the first transport block and the second transport block. The reference transport block is not limited in this embodiment.

The following describes an example of several optional manners of determining the reference transport block by the terminal device. It should be noted that the terminal device determines the reference transport block in any one of the following manners. The terminal device may further determine the reference transport block with reference to at least two of the following manners of determining the reference transport block. This is not specifically limited in this embodiment. It should be further noted that a specific manner of determining the reference transport block in the following is an optional example and is not limited, provided that the reference transport block is either of the first transport block and the second transport block. This falls within the protection scope of this application. The terminal device determines the reference transport block in at least one of the following manners.

Manner 1: The terminal device obtains the indication information sent by the network device. The indication information is higher layer signaling used to indicate the reference transport block. The higher layer signaling shown in this embodiment may also be referred to as configuration information. This is not specifically limited in this embodiment.

Specifically, the network device indicates the reference transport block through the higher layer signaling. For example, the higher layer signaling indicates that the first transport block is the reference transport block. For another example, the higher layer signaling may indicate that the second transport block is the reference transport block.

For example, the higher layer signaling carries a reference transport block field. For example, the reference transport block field is the "first transport block", that is, the reference transport block field indicates that the first transport block is the reference transport block.

For another example, the higher layer signaling indicates that a transport block corresponding to a target codeword is the reference transport block. For example, a transport block corresponding to a codeword 0 is the first transport block, and a transport block corresponding to a codeword 1 is the second transport block. The higher layer signaling indicates that the target codeword is the codeword 0, and the terminal device determines, based on the higher layer signaling, that the first transport block is the reference transport block. Similarly, the higher layer signaling indicates that the target codeword is the codeword 1, and the terminal device determines, based on the higher layer signaling, that the second transport block is the reference transport block. The target codeword may also be another codeword, and is not limited in this embodiment.

For example, in this embodiment, the network device configures at least two serving cells for the terminal device, and the network device may configure the reference transport block for the serving cells through the higher layer signaling. In other words, different serving cells may have same or different reference transport blocks.

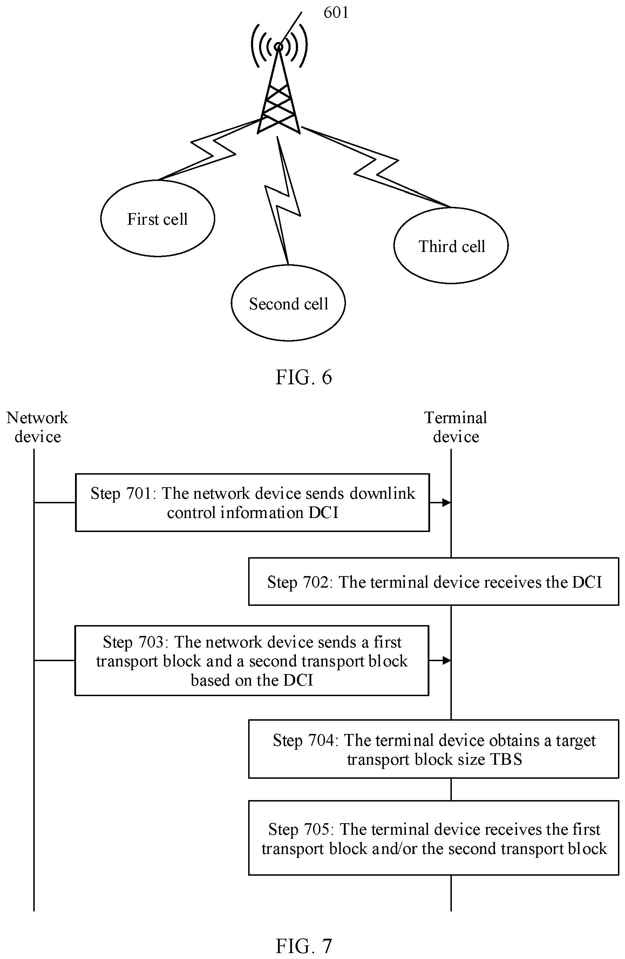

With reference to FIG. 6, the following uses an example in which the network device 601 configures three serving cells, namely, a first serving cell, a second serving cell, and a third serving cell. The network device determines transmission policies for different serving cells, for example, high-reliability transmission or non-high-reliability transmission, and the network device 601 independently configures higher layer signaling for the different serving cells.

For example, the network device 601 configures first higher layer signaling for the first serving cell. The first higher layer signaling is used to indicate to use the method in this embodiment to determine TBSs corresponding to at least two transport blocks, for example, indicate the reference transport block, that is, the at least two transport blocks correspond to same data information. The network device 601 may configure second higher layer signaling for the second serving cell. The second higher layer signaling is used to indicate to use the method in this embodiment to determine TBSs corresponding to at least two transport blocks, for example, indicate the reference transport block, that is, the at least two transport blocks correspond to same data information. The reference transport block indicated by the first higher layer signaling and the reference transport block indicated by the second higher layer signaling may be the same or may be different. This is not specifically limited. For specific description of indicating the reference transport block through the higher layer signaling, refer to the foregoing description. Details are not described again. The network device 601 configures third higher layer signaling for the third serving cell. The third higher layer signaling is used to indicate the terminal device to determine, in the third serving cell according to the current technology, TBSs respectively corresponding to at least two transport blocks, that is, the at least two transport blocks correspond to different data information.

It can be learned that the network device configures different transmission policies for different serving cells, and the network device can flexibly determine a cell for performing reliable transmission. It should be noted that the higher layer signaling shown above may be specific to different serving cells. In another example, the higher layer signaling may also be specific to different bandwidth parts BWPs. To be specific, the network device determines transmission policies for different bandwidth parts, and the network device configures higher layer signaling for the different bandwidth parts. For a specific process, refer to the foregoing process in which the network device configures the higher layer signaling for the different cells. Details are not described again.

For example, the higher layer signaling in this embodiment may also be configured for a downlink hybrid automatic repeat request (hybrid automatic repeat request, HARQ) process number, and a communications system usually has a plurality of parallel HARQ processes. The terminal device determines the downlink HARQ process number through the DCI sent by the network device, or may determine the downlink HARQ process number in a predefined manner. The downlink HARQ process number is used to indicate an identifier of a downlink HARQ process corresponding to current transmission, so that the network device indicates the terminal device to perform initial transmission or retransmission of the corresponding HARQ process. In this embodiment, different downlink HARQ process numbers may be used to indicate different transmission policies. For example, the network device 601 configures first higher layer signaling for the first downlink HARQ process number set, and the first higher layer signaling is used to indicate that TBSs corresponding to at least two transport blocks are determined by using the method in this embodiment for transmission in the first downlink HARQ process number set, for example, indicate the reference transport block, that is, the at least two transport blocks correspond to same data information. The network device 601 configures second higher layer signaling for the second downlink HARQ process number set, and the second higher layer signaling is used to indicate the terminal device to determine, on the second downlink HARQ process number set according to the current technology, TBSs respectively corresponding to at least two transport blocks, that is, the at least two transport blocks correspond to different data information. A downlink HARQ process number set includes one or more downlink HARQ process numbers.

An advantage of using different downlink HARQ process numbers to indicate different transmission policies is that the network device may flexibly determine HARQ process numbers on which reliable transmission is to be performed, that is, the method in this embodiment is used to determine TBSs corresponding to at least two transport blocks, and HARQ process numbers on which non-reliable transmission is to be performed, that is, TBSs respectively corresponding to at least two transport blocks are determined in the current technology. In this way, the terminal device dynamically switches between different transmission policies in a same serving cell or bandwidth part.

For example, the higher layer signaling in this embodiment may further be configured for the DCI, that is, different transmission policies are indicated through different DCI. The DCI may be used to indicate to determine TBSs corresponding to at least two transport blocks by using the method in this embodiment, or used to indicate to determine TBSs respectively corresponding to at least two transport blocks by using the method in the current technology. For example, the network device 601 configures first higher layer signaling for the first DCI, and the first higher layer signaling is used to indicate that according to the method in this embodiment, a transport block indicated by the first DCI is used to determine TBSs corresponding to at least two transport blocks. The network device 601 configures second higher layer signaling for the second DCI, and the second higher layer signaling is used to indicate the terminal device to determine, on a transport block indicated by the second DCI according to the current technology, TBSs respectively corresponding to at least two transport blocks.

For example, the configuring for the DCI in this embodiment refers to configuring for a DCI format. For example, a DCI format 1_0 and/or a DCI format 1_1 are/is configured. With reference to the foregoing description, the first DCI may be DCI in the DCI format 1_0, and the second DCI may be DCI in the DCI format 1_1. Alternatively, there may be another DCI format, and this is not limited in the present invention.

For example, the configuring for the DCI in this embodiment refers to configuring for a radio network identifier (radio network temporary identifier, RNTI) for scrambling the DCI. Each PDCCH uses an RNTI to perform scrambling on cyclic redundancy check (cyclic redundancy check, CRC) of the PDCCH, and the terminal device may also distinguish between different PDCCHs through the RNTI. For example, with reference to the foregoing description, an RNTI for scrambling the first DCI is a first RNTI, and an RNTI for scrambling the second DCI is a second RNTI. The first RNTI is different from the second RNTI. More specifically, the first RNTI and the second RNTI include at least one of the following: a system information radio network identifier (system information-RNTI, SI-RNTI), a random access radio network identifier (random access-RNTI, RA-RNTI), a temporary cell radio network identifier (temporary cell-RNTI, TC-RNTI), a paging radio network identifier (paging-RNTI, P-RNTI), a cell radio network identifier (cell-RNTI, C-RNTI), a configured scheduling radio network identifier (configured scheduling-RNTI, CS-RNTI), or a modulation and coding scheme cell radio network identifier (modulation and coding scheme cell RNTI, MCS-C-RNTI).

For example, the configuring for the DCI in this embodiment refers to configuring for a search space set (search space set) in which the DCI is located. Specifically, one terminal device may monitor a PDCCH search space set (search space set), where the PDCCH search space set includes a group of candidate PDCCHs. The search space set may be a common search space set (common search space set) or a user-specific search space set (UE-specific search space set). The common search space set may be a first common search space subset and a second common search space subset. The user-specific search space set may be a first user-specific search space subset and a second user-specific search space subset. For example, with reference to the foregoing description, a search space set in which the first DCI is located is a first search space set, and a search space set in which the second DCI is located is a second search space set. The first search space set is different from the second search space set.

An advantage of using different DCI to indicate different transmission policies is that the network device may flexibly determine DCI scheduling on which reliable transmission is to be performed, and DCI scheduling on which reliable transmission is not performed. In this way, the terminal device dynamically switches between different transmission policies in a same serving cell or bandwidth part. For example, a current service of the terminal device is eMBB, and the network device separately carries different data information in at least two transport blocks of the terminal device through the second DCI; or a current service of the terminal device is a URLLC service, and the network device carries same data information in at least two transport blocks of the terminal device through the first DCI, so that the terminal device performs reliable transmission.

Manner 2: The terminal device obtains the indication information sent by the network device, where the indication information is modulation and coding scheme (modulation coding scheme, MCS) information corresponding to the first transport block and/or MCS information corresponding to the second transport block. The network device may send the indication information to the terminal device through the DCI, or may send the indication information to the terminal device through higher layer signaling.

For example, the MCS information shown in this embodiment includes at least one of the following: an MCS index, a coding rate, a modulation order, or spectral efficiency. In other words, the terminal device may determine the reference transport block with reference to at least one of the MCS index, the coding rate, the modulation order, or the spectral efficiency.

The modulation order is used to indicate a modulation scheme, and the modulation scheme includes at least one of the following: binary phase shift keying (binary phase shift keying, BPSK), quadrature phase shift keying (quadrature phase shift keying, QPSK), 16 quadrature amplitude modulation (quadrature amplitude modulation, QAM), 64 QAM, or 256 QAM. For example, a modulation order 1 is used to indicate the BPSK, a modulation order 2 is used to indicate the QPSK, a modulation order 4 is used to indicate the 16 QAM, a modulation order 6 is used to indicate the 64 QAM, and a modulation order 8 is used to indicate the 256 QAM. A specific value of the coding rate is not limited in this embodiment. This embodiment is described by using an example in which a value range of the coding rate multiplied by 1024 is greater than or equal to 30 and less than or equal to 948.

The following describes an example of a specific manner in which the network device notifies the terminal device of the MCS information.

In this embodiment, the network device sends the MCS index to the terminal device through the DCI or the higher layer signaling. The terminal device determines MCS information corresponding to an index number of the MCS index. Specifically, both the network device side and the terminal device side may store the following MCS table in Table 1. Specific content included in a target correspondence list shown in Table 1 is not limited in this embodiment, provided that the MCS table shown in Table 1 includes correspondences between index numbers of different MCS indexes and different MCS information. Alternatively, there may be another table. This is not limited in this application. A specific quantity of MCS tables stored in the network device and the terminal device is not limited in this embodiment. For example, the network device and the terminal device may store three or more MCS tables.

**Table 1**

| Index number of an MCS index | Modulation order Qm | Target coding rate R × [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | Reserved | |
| 31 | 6 | Reserved | |

Method 1: The indication information includes the MCS information corresponding to the first transport block and the MCS information corresponding to the second transport block, and the MCS information is the spectral efficiency. A manner in which the terminal device determines the reference transport block based on the indication information includes: The terminal device determines the reference transport block based on first spectral efficiency corresponding to the first transport block and second spectral efficiency corresponding to the second transport block.

For example, the terminal device compares the first spectral efficiency with the second spectral efficiency.

For example, when the first spectral efficiency is higher than the second spectral efficiency, the terminal device determines that the reference transport block is the first transport block corresponding to the first spectral efficiency. When the first spectral efficiency is lower than the second spectral efficiency, the terminal device determines that the reference transport block is the second transport block corresponding to the second spectral efficiency. To be specific, in the foregoing two cases, the terminal device determines, from the first transport block and the second transport block, a transport block corresponding to higher spectral efficiency as the reference transport block.

For example, when the first spectral efficiency is higher than the second spectral efficiency, the terminal device determines that the reference transport block is the second transport block corresponding to the second spectral efficiency. When the first spectral efficiency is lower than the second spectral efficiency, the terminal device determines that the reference transport block is the first transport block corresponding to the first spectral efficiency. To be specific, in the foregoing two cases, the terminal device determines, from the first transport block and the second transport block, a transport block corresponding to lower spectral efficiency as the reference transport block.

For example, when the first spectral efficiency is equal to the second spectral efficiency, the terminal device determines a predefined transport block as the reference transport block. For example, it is predefined that when the first spectral efficiency is equal to the second spectral efficiency, the first transport block or the second transport block is used as the reference transport block.

Method 2: The indication information includes the MCS information corresponding to the first transport block and the MCS information corresponding to the second transport block, and the MCS information is the modulation order. A manner in which the terminal device determines the reference transport block based on the indication information includes: The terminal device determines the reference transport block based on a first modulation order corresponding to the first transport block and a second modulation order corresponding to the second transport block.

For example, the terminal device compares the first modulation order with the second modulation order. Specifically, the modulation order is one of 1, 2, 4, 6, 8, and 10.

For example, when the first modulation order is greater than the second modulation order, the terminal device determines that the reference transport block is the first transport block corresponding to the first modulation order. When the first modulation order is smaller than the second modulation order, the terminal device determines that the reference transport block is the second transport block corresponding to the second modulation order. To be specific, in the foregoing two cases, the terminal device determines, from the first transport block and the second transport block, a transport block corresponding to a greater modulation order as the reference transport block.

For example, when the first modulation order is greater than the second modulation order, the terminal device determines that the reference transport block is the second transport block corresponding to the second modulation order. When the first modulation order is smaller than the second modulation order, the terminal device determines that the reference transport block is the first transport block corresponding to the first modulation order. To be specific, in the foregoing two cases, the terminal device determines, from the first transport block and the second transport block, a transport block corresponding to a smaller modulation order as the reference transport block.

For example, when the first modulation order is equal to the second modulation order, the terminal device determines a predefined transport block as the reference transport block. For example, it is predefined that when the first modulation order is equal to the second modulation order, the first transport block or the second transport block is used as the reference transport block.

Method 3: The indication information includes the MCS information corresponding to the first transport block and the MCS information corresponding to the second transport block, and the MCS information is the coding rate. A manner in which the terminal device determines the reference transport block based on the indication information includes: The terminal device determines the reference transport block based on a first coding rate corresponding to the first transport block and a second coding rate corresponding to the second transport block.

For example, the terminal device compares the first coding rate with the second coding rate.

For example, when the first coding rate is greater than the second coding rate, the terminal device determines that the reference transport block is the first transport block corresponding to the first coding rate. When the first coding rate is less than the second coding rate, the terminal device determines that the reference transport block is the second transport block corresponding to the second coding rate. To be specific, in the foregoing two cases, the terminal device determines, from the first transport block and the second transport block, a transport block corresponding to a greater coding rate as the reference transport block.

For example, when the first coding rate is greater than the second coding rate, the terminal device determines that the reference transport block is the second transport block corresponding to the second coding rate. When the first coding rate is less than the second coding rate, the terminal device determines that the reference transport block is the first transport block corresponding to the first coding rate. To be specific, in the foregoing two cases, the terminal device determines, from the first transport block and the second transport block, a transport block corresponding to a smaller coding rate as the reference transport block.

For example, when the first coding rate is equal to the second coding rate, the terminal device determines a predefined transport block as the reference transport block. For example, it is predefined that when the first coding rate is equal to the second coding rate, the second transport block is used as the reference transport block.

Method 4: The indication information includes the MCS information corresponding to the first transport block and the MCS information corresponding to the second transport block, and a manner in which the terminal device determines the reference transport block based on the indication information includes:
The terminal device determines preset MCS information.

The terminal device determines the reference transport block based on the MCS information corresponding to the first transport block, the preset MCS information, and the MCS information corresponding to the second transport block.

For example, the preset MCS information may be configured by using the higher layer signaling, or may be predefined. Specifically, the preset MCS information is a value corresponding to at least one of the MCS index, the coding rate, the modulation order, or the spectral efficiency. For example, the preset MCS information includes that the MCS index is 26, 27, 28, 29, 30, 31, or the like. For another example, the preset MCS information includes that the MCS is the modulation scheme 64 QAM, 16 QAM, QPSK, or BPSK. For another example, the preset MCS information includes that the coding rate multiplied by 1024 is one or more positive integers in 30 to 679. It should be understood that the foregoing specific value is merely used as an example, and should not constitute a specific limitation. The preset MCS information is not limited in this embodiment, provided that the preset MCS information is predetermined by the terminal device.

For example, when the MCS information corresponding to the first transport block is the same as the preset MCS information, and the MCS information corresponding to the second transport block is different from the preset MCS information, the terminal device determines that the reference transport block is the second transport block. When the MCS information corresponding to the first transport block is different from the preset MCS information, and the MCS information corresponding to the second transport block is the same as the preset MCS information, the terminal device determines that the reference transport block is the first transport block.

For example, when the MCS information corresponding to the first transport block is the same as the preset MCS information, and the MCS information corresponding to the second transport block is different from the preset MCS information, the terminal device determines that the reference transport block is the first transport block. When the MCS information corresponding to the first transport block is different from the preset MCS information, and the MCS information corresponding to the second transport block is the same as the preset MCS information, the terminal device determines that the reference transport block is the second transport block.

For example, when the MCS information corresponding to the first transport block is the same as the preset MCS information, and the MCS information corresponding to the second transport block is the same as the preset MCS information, the terminal device determines that the reference transport block is a predefined transport block or a transport block configured by using the higher layer signaling. When the MCS information corresponding to the first transport block is different from the preset MCS information, and the MCS information corresponding to the second transport block is different from the preset MCS information, the terminal device determines that the reference transport block is a predefined transport block or a transport block configured by using the higher layer signaling.

Method 5: The indication information includes the MCS information corresponding to the first transport block, and a manner in which the terminal device determines the reference transport block based on the indication information includes:
The terminal device determines preset MCS information.

The terminal device determines the reference transport block based on the MCS information corresponding to the first transport block and the preset MCS information.

For description of the preset MCS information, refer to the foregoing description. Details are not described again.

For example, when the MCS information corresponding to the first transport block is the same as the preset MCS information, the terminal device determines that the reference transport block is the second transport block. When the MCS information corresponding to the first transport block is different from the preset MCS information, the terminal device determines that the reference transport block is the first transport block.

For example, when the MCS information corresponding to the first transport block is the same as the preset MCS information, the terminal device determines that the reference transport block is the first transport block. When the MCS information corresponding to the first transport block is different from the preset MCS information, the terminal device determines that the reference transport block is the second transport block.

Optionally, in Method 6: The indication information includes the MCS information corresponding to the second transport block, and a manner in which the terminal device determines the reference transport block based on the indication information includes:
The terminal device determines preset MCS information.

The terminal device determines the reference transport block based on the MCS information corresponding to the second transport block and the preset MCS information.

For description of the preset MCS information, refer to the foregoing description. Details are not described again.

For example, when the MCS information corresponding to the second transport block is the same as the preset MCS information, the terminal device determines that the reference transport block is the first transport block. When the MCS information corresponding to the second transport block is different from the preset MCS information, the terminal device determines that the reference transport block is the second transport block.

For example, when the MCS information corresponding to the second transport block is the same as the preset MCS information, the terminal device determines that the reference transport block is the second transport block. When the MCS information corresponding to the second transport block is different from the preset MCS information, the terminal device determines that the reference transport block is the first transport block.

It should be noted that, alternatively, the network device may determine the reference transport block based on the preset MCS information, and then the network device notifies the terminal device of the determined reference transport block. For a specific process in which the network device determines the reference transport block based on the preset MCS information, refer to the foregoing specific process in which the terminal device determines the reference transport block based on the preset MCS information. Details are not described again.

Manner 3: The terminal device obtains the indication information sent by the network device, where the indication information is redundancy version (redundancy version, RV) information corresponding to the first transport block and/or RV information corresponding to the second transport block. The details are as follows:
Method 1: The indication information includes the RV information corresponding to the first transport block and the RV information corresponding to the second transport block, and a manner in which the terminal device determines the reference transport block based on the indication information includes:
The terminal device determines preset RV information.

The terminal device determines the reference transport block based on the preset RV information, the RV corresponding to the first transport block, and the RV corresponding to the second transport block.

Method 2: The indication information includes the RV information corresponding to the first transport block, and a manner in which the terminal device determines the reference transport block based on the indication information includes:
The terminal device determines preset RV information.

The terminal device determines the reference transport block based on the preset RV information and the RV information corresponding to the first transport block.

Method 3: The indication information includes the RV information corresponding to the second transport block, and a manner in which the terminal device determines the reference transport block based on the indication information includes:
The terminal device determines preset RV information.

The terminal device determines the reference transport block based on the preset RV information and the RV information corresponding to the second transport block.

The preset RV information may be any one of {0, 1, 2, 3}. The preset RV information may be predefined or may be configured by using higher layer signaling.

For a specific determining process, refer to the foregoing process in which the terminal device determines the reference transport block based on the preset MCS information. For details, refer to any one of the method 4 to the method 6 in the manner 2. Details are not described again.

Manner 4: The terminal device obtains the indication information sent by the network device, where the indication information includes MCS information corresponding to the first transport block and/or MCS information corresponding to the second transport block, and the indication information includes RV information corresponding to the first transport block and/or RV information corresponding to the second transport block. The indication information is specifically as follows:
Method 1: The indication information includes the MCS information corresponding to the first transport block, the MCS information corresponding to the second transport block, the RV information corresponding to the first transport block, and the RV information corresponding to the second transport block. A manner in which the terminal device determines the reference transport block based on the indication information includes:
The terminal device determines the preset MCS information and preset RV information.

The terminal device determines the reference transport block based on the preset MCS information, the preset RV information, the MCS information corresponding to the first transport block, the MCS information corresponding to the second transport block, the RV information corresponding to the first transport block, and the RV information corresponding to the second transport block.

For example, when the MCS corresponding to the first transport block is the same as the preset MCS information, the MCS corresponding to the second transport block is different from the preset MCS information, the RV corresponding to the first transport block is the same as the preset RV, and the RV corresponding to the second transport block is different from the preset RV, the terminal device determines that the reference transport block is the first transport block.

For example, when the MCS corresponding to the first transport block is different from the preset MCS information, the MCS corresponding to the second transport block is the same as the preset MCS information, the RV corresponding to the first transport block is different from the preset RV, and the RV corresponding to the second transport block is the same as the preset RV, the terminal device determines that the reference transport block is the second transport block.

Method 2: The indication information includes the MCS information corresponding to the first transport block and the RV information corresponding to the first transport block, and a manner in which the terminal device determines the reference transport block based on the indication information includes:
The terminal device determines the preset MCS information and preset RV information.

The terminal device determines the reference transport block based on the preset MCS information, the preset RV information, the MCS information corresponding to the first transport block, and the RV information corresponding to the first transport block.

For example, when the MCS corresponding to the first transport block is the same as the preset MCS information, and the RV corresponding to the first transport block is the same as the preset RV, the terminal device determines that the reference transport block is the second transport block. For another example, when the MCS corresponding to the first transport block is different from the preset MCS information, and the RV corresponding to the first transport block is different from the preset RV, the terminal device determines that the reference transport block is the first transport block.

Method 3: The indication information includes the MCS information corresponding to the second transport block and the RV information corresponding to the second transport block, and a manner in which the terminal device determines the reference transport block based on the indication information includes:
The terminal device determines the preset MCS information and preset RV information.

The terminal device determines the reference transport block based on the preset MCS information, the preset RV information, the MCS information corresponding to the second transport block, and the RV information corresponding to the second transport block.

For example, when the MCS corresponding to the second transport block is the same as the preset MCS information, and the RV corresponding to the second transport block is the same as the preset RV, the terminal device determines that the reference transport block is the first transport block. For another example, when the MCS corresponding to the second transport block is different from the preset MCS information, and the RV corresponding to the second transport block is different from the preset RV, the terminal device determines that the reference transport block is the second transport block.

In this manner, for a specific process of determining the reference transport block based on the preset MCS and a specific process of determining the reference transport block based on the preset RV information, refer to the foregoing description. Details are not described again. In this manner, if the reference transport block determined by the terminal device based on the preset MCS information is the same as the reference transport block determined based on the preset RV information, a subsequent step of determining a target TBS is performed based on the reference transport block. For example, the reference transport block determined based on the preset MCS is the first transport block, and the reference transport block determined based on the preset RV information is also the first transport block, so that the terminal device performs the subsequent step of determining the target TBS based on the first transport block; or if the reference transport block determined by the terminal device based on the preset MCS information is different from the reference transport block determined based on the preset RV information, the terminal device performs the subsequent step of determining the target TBS based on a preset transport block. For example, the reference transport block determined based on the preset MCS is the first transport block, and the reference transport block determined based on the preset RV information is the second transport block, so that the terminal device performs the subsequent step of determining the target TBS based on the preset second transport block. This is not specifically limited.

Manner 5: The indication information includes MCS information corresponding to the first transport block and MCS information corresponding to the second transport block, and a manner in which the terminal device determines the reference transport block based on the indication information includes:
The terminal device determines, based on the MCS information corresponding to the first transport block, a reference TBS corresponding to the first transport block; the terminal device determines, based on the MCS information corresponding to the second transport block, a reference TB S corresponding to the second transport block; and the terminal device determines the reference transport block based on the reference TBS corresponding to the first transport block and the reference TBS corresponding to the second transport block.

For example, the following describes a specific calculation process in which the terminal device calculates, based on the MCS information corresponding to the first transport block, the reference TBS corresponding to the first transport block. The description of the calculation process is an optional example and is not limited, provided that the terminal device can calculate, based on the MCS information corresponding to the first transport block, the reference TBS corresponding to the first transport block.

Step 1: The terminal device determines, based on an indication of the DCI, a time-frequency resource in which a PDSCH corresponding to the first transport block is located.

Step 2: The terminal device determines a total quantity *N_{RE}* of resource elements based on the time-frequency resource in which the PDSCH corresponding to the first transport block is located.

Step 3: The terminal device calculates an intermediate bit value N_{inf 0} according to the following formula:
The intermediate bit value N_{if 0} *= N_{RE}.R.Qₘ.v,* where *N_{RE}* is the total quantity of resource elements shown above, R is a coding rate included in the MCS information corresponding to the first transport block, *Qₘ* is a modulation order included in the MCS information corresponding to the first transport block, and v is a quantity of transport layers corresponding to the first transport block. For detailed description of specific content included in the MCS information, refer to the foregoing description. Details are not described again.

Step 4: The terminal device determines, based on the intermediate bit value, the reference TBS corresponding to the first transport block.

For example, a time-frequency resource includes a time domain resource and/or a frequency domain resource. The frequency domain resource may be one or more resource blocks (resource block, RB), or may be one or more resource elements (resource element, RE), or may be one or more carriers/cells, or may be one or more bandwidth parts (bandwidth part, BWP), or may be one or more RBs in one or more BWPs on one or more carriers, or may be one or more REs on one or more RBs in one or more BWPs on one or more carriers. The time domain resource may be one or more slots, or may be one or more symbols in one or more slots. The symbol may be an orthogonal frequency division multiplexing (orthogonal frequency division multiplexing, OFDM) symbol. The OFDM symbol may use transform precoding (transform precoding), or may not use transform precoding. If transform precoding is used, the OFDM symbol may also be referred to a single carrier-frequency division multiplexing (single carrier-frequency division multiplexing, SC-FDM) symbol.

For example, the terminal device determines, based on the MCS information corresponding to the second transport block, the reference TBS corresponding to the second transport block. For detailed description of a specific process in which the terminal device calculates the reference TBS corresponding to the second transport block, refer to the foregoing specific process in which the terminal device calculates the reference TBS corresponding to the first transport block. Details are not described again.

For example, the terminal device determines the reference transport block based on the reference TBS corresponding to the first transport block and the reference TBS corresponding to the second transport block.

For example, when the reference TBS corresponding to the first transport block is larger than the reference TBS corresponding to the second transport block, the terminal device determines that the reference transport block is the first transport block. When the reference TBS corresponding to the first transport block is smaller than the reference TBS corresponding to the second transport block, the terminal device determines that the reference transport block is the second transport block. To be specific, in the foregoing two cases, the terminal device determines, from the first transport block and the second transport block, a transport block corresponding to a larger reference TBS as the reference transport block.

For example, when the reference TBS corresponding to the first transport block is larger than the reference TBS corresponding to the second transport block, the terminal device determines that the reference transport block is the second transport block. When the terminal device determines that the reference TBS corresponding to the first transport block is smaller than the reference TBS corresponding to the second transport block, the terminal device determines that the reference transport block is the first transport block. To be specific, in the foregoing two cases, the terminal device determines, from the first transport block and the second transport block, a transport block corresponding to a smaller reference TBS as the reference transport block.

For example, when the terminal device determines that the reference TBS corresponding to the first transport block is equal to the reference TBS corresponding to the second transport block, the terminal device determines either of the first transport block and the second transport block as the reference transport block.

Manner 6: The terminal device obtains the indication information sent by the network device, where the indication information is information that is included in the DCI and that is used to indicate the reference transport block.

For example, in this embodiment, the network device indicates the reference transport block to the terminal device through the DCI, and the terminal device determines the reference transport block based on the DCI.

For example, the DCI shown in this embodiment includes a first bit field, and the first bit field is used to indicate the reference transport block. Correspondences between bit status values of the first bit field and different reference transport blocks may be predefined or may be configured by using higher layer signaling.

For example, when a bit status value of the first bit field is 1, the reference transport block is the first transport block; or when a bit status value of the first bit field is 0, the reference transport block is the second transport block. For another example, when a bit status value of the first bit field is 0, the reference transport block is the first transport block; or when a bit status value of the first bit field is 1, the reference transport block is the second transport block. The bit status value of the first bit field is not limited in this embodiment, provided that the bit status values of the first bit field indicate different reference transport blocks.

Step 506: The terminal device obtains the target TBS based on a reference TBS corresponding to the reference transport block.

In this embodiment, the terminal device determines, based on the DCI and MCS information of the reference transport block, the reference TBS corresponding to the reference transport block. For a specific calculation process, refer to the foregoing description. Details are not described again.

For example, the reference TBS corresponding to the reference transport block is equal to the target TBS.

For example, the target TBS is determined by a function that uses the reference TBS corresponding to the reference transport block as a variable. For example, the target TBS is B1 multiplied by the reference TBS. B1 is a non-zero positive number, and B1 is configured by using the higher layer signaling, predefined, or determined based on the DCI. For example, the target TBS is the reference TBS+B2. B2 is a positive integer multiple of 8, and B2 may be configured by using the higher layer signaling, predefined, or determined based on the DCI.

It should be noted that the description of determining the target TBS in this embodiment is an optional example, and does not constitute a limitation, for example, provided that a difference between the target TBS determined by the terminal device and the reference TBS corresponding to the reference transport block is less than a preset threshold, and the preset threshold may be configured by using the higher layer signaling or predefined. A value of the preset threshold is not limited in this embodiment.

Step 507: The terminal device receives the first transport block and/or the second transport block.

For a specific execution process of step 507 shown in this embodiment, refer to step 305 shown in FIG. 3. The specific execution process is not described herein again.

It can be learned that, according to the method shown in this embodiment, the network device sends the indication information to the terminal device, the terminal device determines the reference transport block based on the indication information, and the terminal device receives the first transport block and/or the second transport block based on the reference TBS corresponding to the reference transport block. Therefore, a success rate of receiving, by the terminal device, data information sent by the network device is improved, thereby effectively improving data transmission reliability. In addition, compared with the current technology, the method in this embodiment is more applicable to ultra-reliable and low-latency communication URLLC in an NR system.

A specific execution process of the information transmission method shown in this embodiment is described below by using an example with reference to FIG. 7. First, it should be noted that a difference between the information transmission method shown in FIG. 7 and the information transmission method shown in FIG. 5 lies in that, in the embodiment shown in FIG. 5, the terminal device needs to determine the reference TBS of the reference transport block based on the indication information, and determine the target TBS based on the reference TBS of the reference transport block, and the terminal device decodes the first transport block and/or the second transport block based on the target TBS, but in the embodiment shown in FIG. 7, the network device directly indicates the target TBS to the terminal device. To be specific, in the embodiment shown in FIG. 7, the terminal device does not need to perform a related step of determining the reference transport block. For a specific execution process, refer to the following description.

Step 701: A network device sends downlink control information DCI.

Step 702: A terminal device receives the DCI.

Step 703: The network device sends the first transport block and the second transport block based on the DCI.

For a specific execution process of steps 701 to 703 in this embodiment, refer to steps 501 to 503 in FIG. 5 for details. The specific execution process is not described in this embodiment again.

Step 704: The terminal device obtains a target transport block size TBS.

In this embodiment, the terminal device determines the target TBS based on higher layer signaling and/or the DCI. Specifically, the terminal device determines the target TBS based on the higher layer signaling, and/or the terminal device determines the target TBS based on the DCI, where the target TBS is one of at least one predefined preset TBS.

The terminal device further determines the target TBS with reference to the higher layer signaling and the DCI. Specifically, the terminal device determines at least one preset TBS based on the higher layer signaling, and determines the target TBS based on the DCI. The target TBS is one of the at least one preset TBS.

The following describes, by using an example, at least one optional manner of obtaining the target TBS by the terminal device in this embodiment.

Manner 1: The terminal device determines the target TBS based on the higher layer signaling.

For example, the terminal device receives the higher layer signaling sent by the network device. For specific description of the higher layer signaling, refer to the embodiment shown in FIG. 5. Details are not described in this embodiment again.

For example, the target TBS is one of the at least one predefined preset TBS. The preset TBS may include one or more of 20, 32, 50, 80, 200, 250, 300, 1200, 4096, and 10000. The higher layer signaling shown in this embodiment indicates the target TBS. A specific manner is not limited. For example, the higher layer signaling may carry a field used to indicate the target TBS.

For example, the network device determines that TBSs corresponding to the first transport block and the second transport block are 200 bits. The network device sends the higher layer signaling to the terminal device, and the higher layer signaling is used to indicate that the target TBS is 200 bits. The terminal device receives the higher layer signaling, and further determines that the target TBS is 200 bits.

For another example, a preset TBS list is predefined, or the preset TBS list may be sent by the network device to the terminal device through the higher layer signaling. The preset TBS list includes at least one preset TBS. The target TBS is one of the at least one preset TBS. A predefined manner is not limited in this embodiment, provided that the network device and the terminal device store a same preset TBS list. The preset TBS list includes correspondences between indication field information in different higher layer signaling and different preset TBSs. Details are shown in the following Table 2.

**Table 2**

| Indication field information in higher layer signaling | Preset TBS |
|---|---|
| 00 | First preset TBS |
| 01 | Second preset TBS |
| 02 | Third preset TBS |
| 03 | Fourth preset TBS |

A specific quantity of pieces of indication field information in the higher layer signaling included in the preset TBS list and a specific quantity of preset TBSs are not limited in this embodiment, provided that the preset TBS list includes field information for indicating the preset TBS in one or more pieces of higher layer signaling and includes one or more preset TBSs, and the preset TBS list creates correspondences between indication field information in different higher layer signaling and different preset TBSs. This falls within the protection scope of this application. Indication field information in one piece of higher layer signaling may correspond to one preset TBS, or may correspond to at least two preset TBSs.

For example, the network device determines that the target TBS is equal to the second preset TBS. The network device determines, based on the preset TBS list, that indication field information in higher layer signaling corresponding to the second preset TBS is "01", and the network device sends, to the terminal device, the higher layer signaling that carries the indication field information "01". The terminal device receives the higher layer signaling, and obtains the indication field information "01". The terminal device determines, based on the preset TBS list, the second preset TBS corresponding to the indication field information "01", and the terminal device determines that the target TBS is the second preset TBS.

Manner 2: The terminal device determines the target TBS based on the DCI sent by the network device.

Specifically, the terminal device determines the target TBS based on the DCI sent by the network device, and the DCI may indicate the target TBS. A specific manner in which the DCI indicates the target TBS is not limited in this embodiment. For example, the DCI may carry indication information used to indicate the target TBS, a search space set in which the DCI is located is used to indicate the target TBS, a DCI format of the DCI is used to indicate the target TBS, or an RNTI used to scramble the DCI is used to indicate the target TBS.

Optionally, the terminal device obtains a correspondence between the DCI format and a value of the target TBS. For example, a first DCI format corresponds to a first preset TBS, and second DCI corresponds to a second preset TBS. Optionally, the terminal device obtains a correspondence between the RNTI used to scramble the DCI and a value of the target TBS. For example, a first RNTI corresponds to a first preset TBS, and a second RNTI corresponds to a second preset TBS. Optionally, the terminal device obtains a correspondence between the search space set in which the DCI is located and a value of the target TBS. For example, a first search space set corresponds to a first preset TBS, and a second search space set corresponds to a second preset TBS. For details about the search space set, the RNTI, and the DCI format, refer to the embodiment shown in FIG. 5. Details are not described in this embodiment again.

Specifically, the terminal device first determines the at least one preset TBS based on the higher layer signaling, and then determines the target TBS based on the DCI, where the target TBS is one of the at least one preset TBS.

Specifically, the target TBS is one of the at least one predefined preset TBS or one of the at least one preset TBS configured by using the higher layer signaling. A correspondence between the at least one preset TBS and a bit status value of a second bit field in the DCI is shown in Table 3. The second bit field is a bit field included in the DCI. It may be understood that, in this embodiment, a specific quantity of bit status values of the second bit field and a specific quantity of preset TBSs are not limited. Provided that the preset TBS list includes bit status values of one or more second bit fields and includes one or more preset TBSs, the correspondence falls within the protection scope of this application. A quantity of bits in the second bit field is 2 or 3, or is configured based on the higher layer signaling.

**Table 3**

| Bit status value of a second bit field | Target TB S |
|---|---|
| 00 | First preset TBS |
| 01 | Second preset TBS |
| 10 | Third preset TBS |
| 11 | Fourth preset TBS |

For example, the correspondence between the bit status value of the second bit field and the preset TBS may be sent by the network device to the terminal device through the higher layer signaling. Specifically, optionally, the correspondence between the bit status value of the second bit field and the preset TBS is further stored in the network device and the terminal device in a predefined manner. A specific predefined manner is not limited.

Manner 3: The terminal device determines preset MCS information, and obtains the target transport block size TBS based on the preset MCS information.

For example, the terminal device determines the preset MCS information. For details about the preset MCS information, refer to the embodiment shown in FIG. 5. Details are not described in this embodiment again. The preset MCS information is not limited in this embodiment, provided that the preset MCS information is predetermined by the terminal device.

For example, the target TBS is a preset TBS, and the preset TBS is configured by using the higher layer signaling or is predefined.

Method 1: The terminal device obtains the target TBS based on MCS information corresponding to the first transport block, MCS information corresponding to the second transport block, and the preset MCS information.

Method 2: The terminal device obtains the target TBS based on MCS information corresponding to the first transport block and the preset MCS information.

Method 3: The terminal device obtains the target TBS based on MCS information corresponding to the second transport block and the preset MCS information.

In this manner, if the MCS information corresponding to the first transport block is the same as the preset MCS information and/or the MCS information corresponding to the second transport block is the same as the preset MCS information, the terminal device determines that the target TBS is equal to the preset TBS.

Manner 4: The terminal device determines preset RV information, and the terminal device obtains the target TBS based on the preset RV information.

Specifically, the preset RV information may be predefined or may be configured by using the higher layer signaling. For specific description of the preset RV information, refer to the embodiment shown in FIG. 5. Details are not described again. The terminal device determines the target TBS based on the preset RV. For example, when an RV corresponding to the first transport block is the same as the preset RV, and/or an RV corresponding to the second transport block is the same as the preset RV, the terminal device determines that the target TBS is equal to the preset TBS. For description of the preset TBS, refer to the foregoing description. Details are not described again.

Manner 5: The terminal device determines preset MCS information and preset RV information, and obtains the target TBS based on the preset MCS information and the preset MCS information.

Method 1: The terminal device obtains the target TBS based on MCS information corresponding to the first transport block, MCS information corresponding to the second transport block, RV information corresponding to the first transport block, RV information corresponding to the second transport block, the preset MCS information, and the preset RV information.

Method 2: The terminal device obtains the target TBS based on MCS information corresponding to the first transport block, RV information corresponding to the first transport block, the preset MCS information, and the preset RV information.

Method 3: The terminal device obtains the target TBS based on MCS information corresponding to the second transport block, RV information corresponding to the second transport block, the preset MCS information, and the preset RV information.

It can be learned that in this manner, the terminal device determines the target TBS based on the preset MCS information and the preset RV. Specifically, when determining that at least one of the first transport block and the second transport block satisfies a preset condition, the terminal device determines that the target TBS is equal to the preset TBS. For description of the preset TBS, refer to the foregoing description. Details are not described again. The preset condition is that MCS information corresponding to a transport block is the same as the preset MCS information, and/or RV information corresponding to a transport block is the same as the preset RV information.

Step 705: The terminal device receives the first transport block and/or the second transport block.

For a specific execution process of step 705 shown in this embodiment, refer to step 507 shown in FIG. 5. The specific execution process is not described again.

It can be learned that according to the method shown in this embodiment, the network device directly notifies the terminal device of the target TBS through the DCI and/or the higher layer signaling. The terminal device does not need to calculate a TBS of the first transport block and a TBS of the second transport block, and decodes the first transport block and/or the second transport block based on the target TBS, thereby improving efficiency and a success rate of receiving, by the terminal device, data information sent by the network device, and further effectively improving data transmission reliability. In addition, compared with the current technology, the method in this embodiment is more applicable to ultra-reliable and low-latency communication URLLC in an NR system.

To better understand the information transmission method shown in this application, the following provides description by using an example with reference to a specific application scenario.

First, a specific structure of a communications system to which this application scenario is applicable is optionally described. In the communications system in this embodiment, to improve rate experience of a user at a cell edge in NR, a plurality of transmit/receive points (tx/rx point, TRP) are introduced, and the cell edge shown in this application scenario is not a physical edge, but an edge of signal coverage. For example, there are many buildings around a terminal device, some signals transmitted between the network device and the terminal device are blocked by the buildings, and an area in which the signals transmitted between the network device and the terminal device can be blocked may be referred to as the cell edge. In this application scenario, the TRPs are disposed at the cell edge.

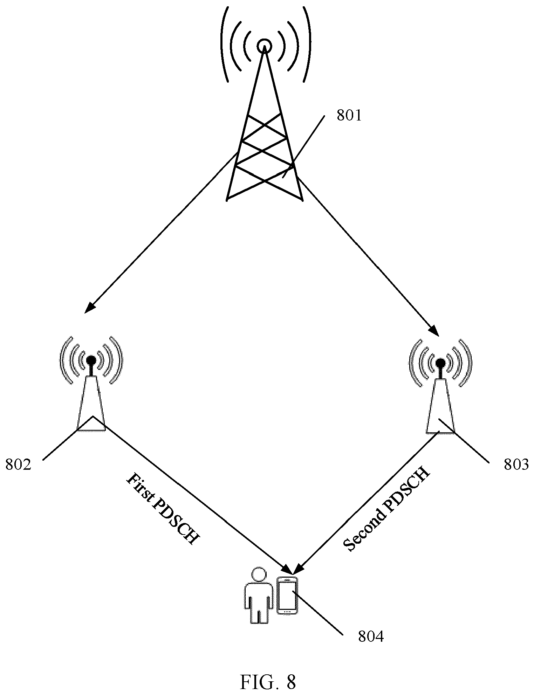

For the structure of the communications system shown in this application scenario, refer to FIG. 8. The communications system includes a network device 801 and a terminal device 804. For specific description of the network device 801 and the terminal device 804, refer to FIG. 1 and FIG. 2. Details are not described in this application scenario again. The application scenario shown in FIG. 8 further includes a first TRP 802 and a second TRP 803. A specific quantity of TRPs included in the communications system is not limited in this application scenario. In this application scenario, an example in which the communications system includes two TRPs is used for description.

In this application scenario, the first TRP 802 is used to transmit a first transport block, the second TRP 803 is used to transmit a second transport block, and the first transport block and the second transport block carry same data information. For detailed description of the first transport block and the second transport block, refer to the foregoing embodiments. This is not specifically limited in this application scenario.

In the current technology, ideal backhaul or non-ideal backhaul may be performed between at least two TRPs. The ideal backhaul means that information is exchanged between a plurality of TRPs without a latency, to exchange data or control information quickly and arbitrarily at any time, and the non-ideal backhaul means that there is a latency in information exchange between a plurality of TRPs (that is, information cannot be exchanged quickly, and the information can only be exchanged slowly).

In this application scenario, there is non-ideal backhaul between the first TRP 802 and the second TRP 803. If there is ideal backhaul between the first TRP 802 and the second TRP 803, information may be transmitted between the first TRP 802 and the second TRP 803 without a latency, the network device 801 dynamically adjusts, through higher layer signaling, a TBS corresponding to the first transport block transmitted by the first TRP 802 and a TBS corresponding to the second transport block transmitted by the second TRP 803, and a case in which the TBS corresponding to the first transport block that is received by the terminal device 804 is not equal to the TBS corresponding to the second transport block that is received by the terminal device 804, so that the terminal device 804 cannot determine a transport block whose corresponding TBS is used as a reference for decoding does not occur. Therefore, in this application scenario, there is the non-ideal backhaul between the first TRP 802 and the second TRP 803.

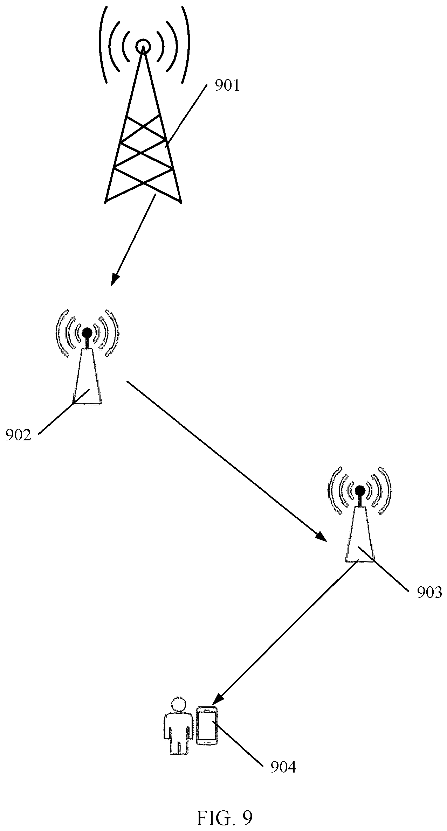

It should be noted that, when a structure of the TRP is introduced in this application scenario, FIG. 8 is merely an example, and does not constitute a limitation, provided that the network device sends the transport block to the terminal device by using the TRP, for example, a structure of the communications system shown in FIG. 9. In the communications system shown in FIG. 9, a network device 901 and a terminal device 904 are included. For specific description of the network device 901 and the terminal device 904, refer to the embodiments shown in FIG. 1 and FIG. 2. This is not limited in this application scenario.

As shown in FIG. 9, two TRPs, namely, a first TRP 902 and a second TRP 903, are also introduced into the communications system. The network device 901 sends downlink data to the first TRP 902, the first TRP 902 forwards all received downlink data to the second TRP 903, and the second TRP 903 forwards the downlink data to the terminal device 904. Further optionally, after receiving the downlink data sent by the network device 901, the first TRP 902 may split the received downlink data to obtain first downlink data and second downlink data, the first TRP 902 sends the second downlink data to the second TRP 903, so that the first TRP 902 sends the first downlink data to the terminal device 904, and the second TRP 903 sends the second downlink data to the terminal device 904. This is not specifically limited in this application scenario.

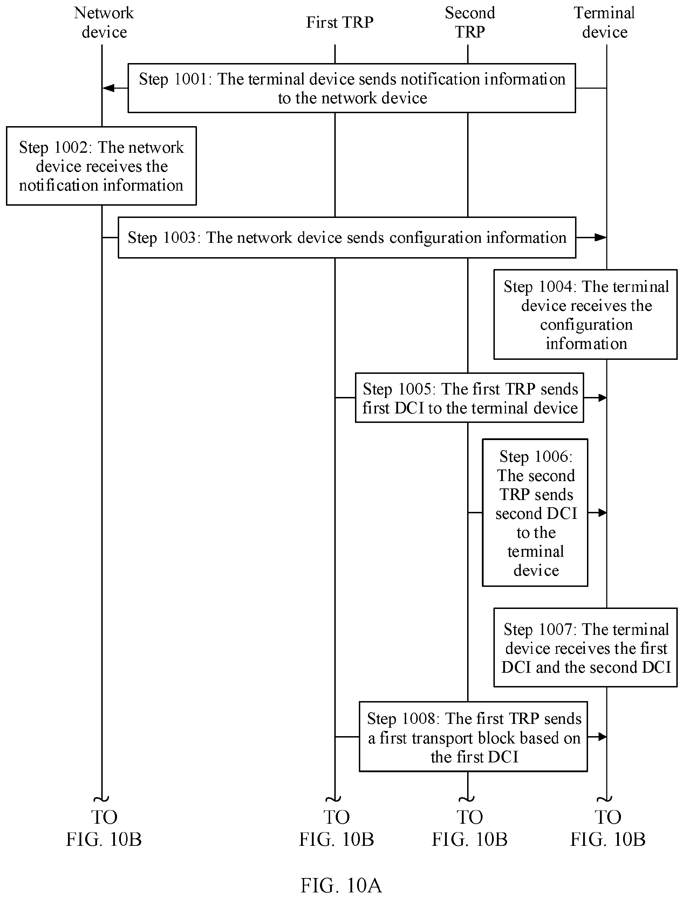

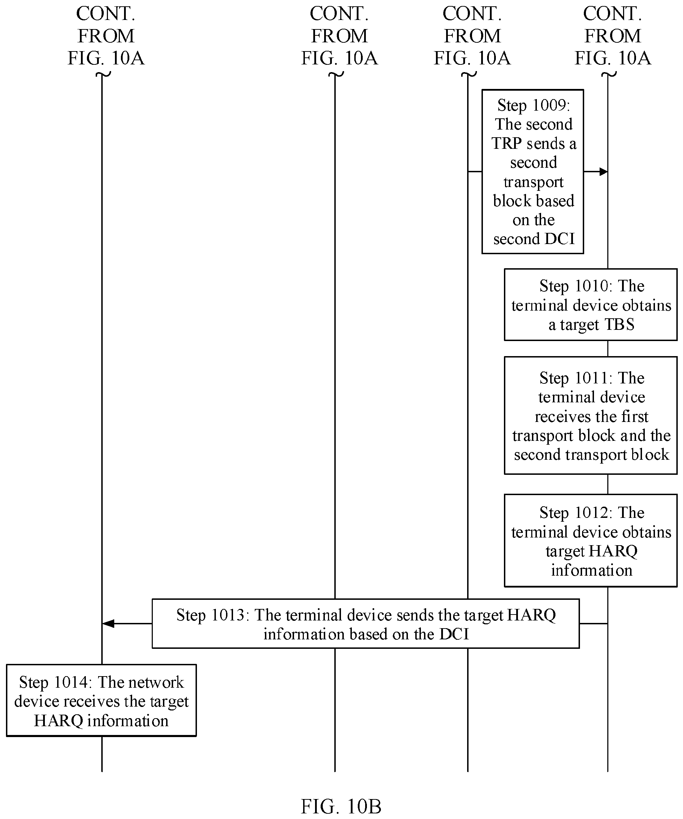

A specific process of performing the information transmission method in this application scenario is described below by using an example with reference to FIG. 10A and FIG. 10B. It should be noted that the information transmission method shown in FIG. 10A and FIG. 10B is based on the communications system shown in FIG. 8. If the information transmission method is based on the communications system shown in FIG. 9, for a specific execution process, refer to FIG. 10A and FIG. 10B. Details are not described again.

Step 1001: A terminal device sends notification information to a network device.

For example, the terminal device sends first notification information to the network device. The first notification information is used to notify the network device that the terminal device has a capability of receiving a first transport block and a second transport block that correspond to a same TBS. Optionally, the first notification information is used to notify the network device that the terminal device has a capability of simultaneously receiving a first transport block and a second transport block that correspond to a same TBS. The simultaneous reception may also be understood as joint reception.

For example, the terminal device sends second notification information to the network device. The second notification information is used to notify the network device that the terminal device does not have a capability of receiving a first transport block and a second transport block that correspond to a same TBS. Optionally, the second notification information is used to notify the network device that the terminal device does not have a capability of simultaneously receiving a first transport block and a second transport block that correspond to a same TBS. Optionally, the second notification information is used to notify the network device that the terminal device has a capability of nonsimultaneously receiving a first transport block and a second transport block that correspond to a same TBS. Optionally, the second notification information is used to notify the network device that the terminal device has a capability of simultaneously receiving a first transport block and a second transport block that correspond to different TBSs.

For example, the terminal device sends third notification information to the network device. The third notification information is used to notify the network device that the terminal device has a capability of supporting reception of two transport blocks sent by at least two TRPs. Optionally, the third notification information is used to notify the network device that the terminal device has a capability of supporting simultaneous reception of two transport blocks sent by at least two TRPs.

For example, the terminal device sends fourth notification information to the network device. The fourth notification information is used to notify the network device that the terminal device does not have a capability of supporting reception of two transport blocks sent by at least two TRPs. Optionally, the fourth notification information is used to notify the network device that the terminal device does not have a capability of supporting simultaneous reception of two transport blocks sent by at least two TRPs. Optionally, the fourth notification information is used to notify the network device that the terminal device has only a capability of supporting nonsimultaneous reception of two transport blocks sent by at least two TRPs.

In this embodiment, the terminal device sends the notification information to the network device by using the first TRP, and/or the terminal device sends the notification information to the network device by using the second TRP, and/or the terminal device may directly send the notification information to the network device. A specific manner is not limited in this application scenario, provided that the network device can receive the notification information sent by the terminal device.

Step 1002: The network device receives the notification information.

In this embodiment, that the network device determines a capability of the terminal device based on the notification information sent by the terminal device is specifically as follows:
For example, the notification information sent by the terminal device is the first notification information, and the network device determines, based on the received first notification information, that the terminal device has a capability of receiving a first transport block and a second transport block that correspond to a same TBS.

For another example, the notification information sent by the terminal device is the second notification information, and the network device determines, based on the received second notification information, that the terminal device does not have a capability of receiving a first transport block and a second transport block that correspond to a same TBS.

For another example, the notification information sent by the terminal device is the third notification information, and the network device determines, based on the received third notification information, that the terminal device has a capability of supporting reception of two transport blocks sent by at least two TRPs.

For another example, the notification information sent by the terminal device is the fourth notification information, and the network device determines, based on the received fourth notification information, that the terminal device does not have a capability of supporting reception of two transport blocks sent by at least two TRPs.

For specific description of the notification information, refer to step 1001. Details are not described again.

Step 1003: The network device sends configuration information.

For example, the network device sends first configuration information to the terminal device, where the first configuration information is used to configure the terminal device to be capable of receiving a first transport block and a second transport block that correspond to a same TBS. Optionally, the first configuration information is used to configure the terminal device to be capable of simultaneously receiving a first transport block and a second transport block that correspond to a same TBS. The simultaneous reception may also be understood as joint reception.

For another example, the network device sends second configuration information to the terminal device. The second configuration information is used to configure the terminal device to be incapable of receiving a first transport block and a second transport block that correspond to a same TBS. Optionally, the second configuration information is used to configure the terminal device to be incapable of simultaneously receiving a first transport block and a second transport block that correspond to a same TBS. Optionally, the second configuration information is used to configure the terminal device to be only capable of nonsimultaneously receiving a first transport block and a second transport block that correspond to a same TBS. Optionally, the second configuration information is used to configure the terminal device to be capable of simultaneously receiving a first transport block and a second transport block that correspond to different TBSs.

For another example, the network device sends third configuration information to the terminal device. The third configuration information is used to configure the terminal device to be capable of receiving two transport blocks sent by at least two TRPs. Optionally, the third configuration information is used to configure the terminal device to be capable of simultaneously receiving two transport blocks sent by at least two TRPs. Optionally, there is non-ideal backhaul between the at least two TRPs.

For another example, the network device sends fourth configuration information to the terminal device. The fourth configuration information is used to configure the terminal device to be incapable of receiving two transport blocks sent by at least two TRPs. Optionally, the fourth configuration information is used to configure the terminal device to be incapable of simultaneously receiving two transport blocks sent by at least two TRPs. Optionally, the fourth configuration information is used to configure the terminal device to be only capable of nonsimultaneously receiving two transport blocks sent by at least two TRPs.

Step 1004: The terminal device receives the configuration information.

The terminal device receives the configuration information, and the terminal device performs corresponding configuration based on the configuration information. Details are as follows:
For example, the configuration information received by the terminal device is the first configuration information, and the terminal device configures, based on the first configuration information, the terminal device to be capable of receiving a first transport block and a second transport block that correspond to a same TBS.

For example, the configuration information received by the terminal device is the second configuration information, and the terminal device configures, based on the second configuration information, the terminal device to be incapable of receiving a first transport block and a second transport block that correspond to a same TBS.

For example, the configuration information received by the terminal device is the third configuration information, and the terminal device configures, based on the third configuration information, the terminal device to be capable of receiving two transport blocks sent by at least two TRPs.

For example, the configuration information received by the terminal device is the fourth configuration information, and the terminal device configures, based on the fourth configuration information, the terminal device to be incapable of receiving two transport blocks sent by at least two TRPs.

It should be noted that step 1001 to step 1004 shown in this embodiment are optional steps, and a specific execution time sequence is not limited in this embodiment. The network device can send the first transport block and the second transport block to the terminal device through interaction between the terminal device and the network device, and the terminal device has a capability of receiving the first transport block and the second transport block, so that the terminal device receives the first transport block and/or the second transport block.

The following describes, by using an example, optional cases performed in step 1001 to step 1004.

### Case 1:

A time sequence of performing the steps is as follows: Step 1001 is first executed, and then step 1002 is executed. In this case, step 1003 and step 1004 may not be executed. A case of this execution time sequence is as follows:
For example, the terminal device sends the first notification information to the network device by performing step 1001, the network device receives the first notification information by performing step 1002, and the network device determines that the terminal device has a capability of receiving a first transport block and a second transport block that correspond to a same TBS.

For example, the terminal sends the third notification information to the network device by performing step 1001, the network device receives the third notification information by performing step 1002, and the network device determines that the terminal device has a capability of supporting reception of two transport blocks sent by at least two TRPs.

### Case 2:

In this manner, the network device may consider by default that the terminal device has a capability of receiving a first transport block and a second transport block that correspond to a same TBS, and the network device configures the terminal device by using the configuration information. A time sequence of performing the steps in this manner is as follows: Step 1003 is first executed, and then step 1004 is executed. In this case, step 1001 and step 1002 may not be executed. A case of this execution time sequence is as follows:
For example, the network device sends the first configuration information to the terminal device by performing step 1003, the terminal device receives the first configuration information by performing step 1004, and the terminal device configures, based on the first configuration information, the terminal device to be capable of receiving a first transport block and a second transport block that correspond to a same TBS.

For example, the network device sends the third configuration information to the terminal device by performing step 1003, the terminal device receives the third configuration information by performing step 1004, and the terminal device configures, based on the third configuration information, the terminal device to receive two transport blocks sent by at least two TRPs.

### Case 3:

In this manner, the network device sends the configuration information to the terminal device only after determining whether the terminal device has a capability of receiving a first transport block and a second transport block that correspond to a same TBS. A time sequence for performing the steps in this manner is: step 1001, step 1002, step 1003, and step 1004. A case of this execution time sequence is as follows:
For example, the terminal device sends the first notification information to the network device by performing step 1001, the network device receives the first notification information by performing step 1002, and the network device determines, based on the first notification information, that the terminal device has a capability of receiving a first transport block and a second transport block that correspond to a same TBS. In this case, the network device performs step 1003 to send the first configuration information or the second configuration information to the terminal device, and the terminal device also performs step 1004 to receive the first configuration information or the second configuration information.

For example, the terminal device sends the second notification information to the network device by performing step 1001, the network device receives the second notification information by performing step 1002, and the network device determines, based on the second notification information, that the terminal device does not have a capability of receiving a first transport block and a second transport block that correspond to the same TBS. In this case, the network device does not perform step 1003, and the terminal device does not perform step 1004 to receive the first configuration information.

For example, the terminal device sends the fourth notification information to the network device by performing step 1001, the network device receives the fourth notification information by performing step 1002, and the network device determines, based on the fourth notification information, that the terminal device does not have a capability of supporting reception of two transport blocks sent by at least two TRPs. In this case, the network device does not perform step 1003, and the terminal device does not perform step 1004 to receive the first configuration information.

It may be understood that, when the terminal device reports, through the second notification information or the fourth notification information, that a capability of receiving a first transport block and a second transport block that correspond to a same TBS is not supported, and/or the network device configures, through the second configuration information or the fourth configuration information, the terminal device to be incapable of receiving a first transport block and a second transport block that correspond to a same TBS, the terminal device may determine, according to the current technology, TBSs respectively corresponding to the two transport blocks, and the terminal device separately decodes the two transport blocks.

Step 1005: The first TRP sends first DCI to the terminal device.

Step 1006: The second TRP sends second DCI to the terminal device.

In this application scenario, the network device determines that the terminal device has a capability of receiving a first transport block and a second transport block that correspond to a same TBS, and the network device controls the first TRP to send the first DCI on a first PDCCH, where the first DCI is used to indicate transmission of a first PDSCH. In addition, the second TRP sends the second DCI on a second PDCCH, where the second DCI is used to indicate transmission of a second PDSCH. The first PDSCH carries the first transport block, and the second PDSCH carries the second transport block. In other words, in this application scenario, each piece of DCI is used to indicate sending of one transport block. The terminal device may receive transmission of the two PDSCHs on a same time-frequency domain resource or different time-frequency domain resources.

Step 1007: The terminal device receives the first DCI and the second DCI.

Step 1008: The first TRP sends the first transport block based on the first DCI.

Step 1009: The second TRP sends the second transport block based on the second DCI.

For a specific process in which the first TRP or the second TRP sends the transport block based on an indication of the DCI, refer to the foregoing specific process in which the network device sends the first transport block and the second transport block based on the indication of the DCI. Details are not described herein again, provided that the first transport block sent by the first TRP and the second transport block sent by the second transport block carry same data information.

Step 1010: The terminal device obtains a target TBS.

For a specific process in which the terminal device obtains the target TBS in this application scenario, refer to the foregoing embodiment. Details are not described in this application scenario again.

Step 1011: The terminal device receives the first transport block and the second transport block.

In this application scenario, an example in which the terminal device needs to decode the first transport block and the second transport block is used for description. A specific process in which the terminal device decodes the first transport block and the second transport block in this application scenario is described below by using an example.

### First decoding manner:

The terminal device decodes the first transport block based on the first DCI and the target TBS, and the terminal device further decodes the second transport block based on the second DCI and the target TBS. For a specific decoding process, refer to the foregoing embodiment. Details are not described again.

### Second decoding manner:

The terminal device combines information corresponding to the first transport block and information corresponding to the second transport block, to obtain combined information. The terminal device decodes the combined information.

For example, the information corresponding to the first transport block obtained by the terminal device is soft-bit information of the first transport block, and the information corresponding to the second transport block obtained by the terminal device is soft-bit information of the second transport block. The terminal device performs hybrid automatic repeat request (hybrid automatic repeat request, HARQ) combination on the soft-bit information corresponding to the first transport block and the soft-bit information corresponding to the second transport block, to obtain combined information. For another example, the information corresponding to the first transport block obtained by the terminal device is data information of the first transport block, and the information corresponding to the second transport block obtained by the terminal device is data information of the second transport block. The terminal device performs energy combination of received data information on the soft-bit information corresponding to the first transport block and the data information corresponding to the second transport block, to obtain combined information.

An advantage of using this decoding manner lies in that because the first transport block and the second transport block send same data information, the terminal device superposes the information corresponding to the first transport block and the information corresponding to the second transport block, so that signal power is increased, and demodulation is performed after superposition. Compared with the foregoing first decoding manner in which a single transport block is separately demodulated, this manner greatly improves a decoding success rate.

### Third decoding manner:

The terminal device determines that the first transport block is a transport block corresponding to initial transmission and the second transport block is a transport block corresponding to retransmission, and the terminal device decodes the first transport block in the foregoing first decoding manner.

If the first transport block fails to be decoded, and/or if the terminal device fails to decode the second transport block based on the second DCI and the target TBS, the terminal device performs decoding in the second decoding manner shown above.

### Fourth decoding manner:

The terminal device determines that the second transport block is a transport block corresponding to initial transmission and the first transport block is a transport block corresponding to retransmission, and the terminal device decodes the second transport block in the foregoing first decoding manner.

If the second transport block fails to be decoded, and/or if the terminal device fails to decode the first transport block based on the first DCI and the target TBS, the terminal device performs decoding in the second decoding manner shown above.

Step 1012: The terminal device obtains target HARQ information.

To better understand step 1012 shown in this application scenario, the following first describes HARQ information.

After the terminal device receives a transport block, the terminal device feeds back a decoding result of the transport block to the network device through a PUCCH or a PUSCH. If the terminal device successfully decodes the transport block, information fed back by the terminal device is an acknowledgment (acknowledgment, ACK). If the terminal device fails to decode the transport block, information fed back by the terminal device is a negative acknowledgment (negative acknowledgment, NACK). ACK information and NACK information are collectively referred to as HARQ information in a communications system. Generally, the terminal device feeds back HARQ information corresponding to the transport block, so that the network device can quickly retransmit the transport block after learning that the terminal device incorrectly receives the transport block, to ensure data transmission reliability.

For example, the network device sends the first transport block to the terminal device by using the first TRP, and the network device further sends the second transport block to the terminal device by using the second TRP. According to the current technology, after the terminal device decodes the first transport block and the second transport block, the terminal device needs to feed back, to the network device, first HARQ information corresponding to the first transport block and second HARQ information corresponding to the second transport block, so that the network device determines, based on the first HARQ information, whether the first transport block is successfully decoded by the terminal device, and further determines, based on the second HARQ information, whether the second transport block is successfully decoded by the terminal device. However, because in the application scenario in this application, the first transport block and the second transport block correspond to the same TBS, that is, carry the same data information, the terminal device does not need to separately feed back the first HARQ information corresponding to the first transport block and the second HARQ information corresponding to the second transport block. Instead, the terminal device feeds back only one piece of decoding result information, to notify the network device of whether the terminal device successfully receives the data information. In this way, a quantity of bits of feedback information can be reduced, and a probability of receiving HARQ feedback information by the network device can be increased, thereby increasing a success rate of data transmission.

Therefore, the terminal device sends the target HARQ information, where the target HARQ information is used to indicate whether the terminal device successfully receives the first transport block and/or the second transport block. The following specifically describes the target HARQ information.

A specific process in which the terminal device determines the target HARQ information is: The terminal device performs a linear OR operation on the first HARQ information and the second HARQ information, to obtain the target HARQ information.

A first manner of performing the linear OR operation is:

Only 1-bit information is fed back for each of the first transport block and the second transport block. For a specific manner in which the terminal device performs the linear OR operation on the first HARQ information and the second HARQ information, refer to Table 4.

**Table 4**

| First HARQ information | Second HARQ information | Destination HARQ information |
|---|---|---|
| ACK | ACK | ACK |
| ACK | NACK | ACK |
| NACK | ACK | ACK |
| NACK | NACK | NACK |

For example, as shown in the second row in Table 4, after the terminal device successfully decodes the first transport block, the terminal device determines that the first HARQ information is an ACK, and after the terminal device successfully decodes the second transport block, the terminal device determines that the second HARQ information is an ACK. After the terminal device performs the linear OR operation, the terminal device determines that the destination HARQ information is an ACK.

For example, as shown in the third row in Table 4, after the terminal device successfully decodes the first transport block, the terminal device determines that the first HARQ information is an ACK, and after the terminal device fails to decode the second transport block, the terminal device determines that the second HARQ information is a NACK. After the terminal device performs the linear OR operation, the terminal device determines that the target HARQ information is an ACK.

It can be learned by analogy that when at least one of the first transport block and the second transport block is successfully decoded (as shown in the second row to the fourth row in Table 4), after performing the linear OR operation, the terminal device determines that the target HARQ information is an ACK, in other words, the data information carried in the first transport block and the data information carried in the second transport block are successfully received. When each of the first transport block and the second transport block fails to be decoded (as shown in the fifth row in Table 4), after performing the linear OR operation, the terminal device determines that the target HARQ information is a NACK, in other words, the data information carried in the first transport block and the data information carried in the second transport block fail to be received.

If the terminal device receives only the first transport block but does not receive the second transport block, the terminal device determines that a decoding result of the second transport block, namely, the second HARQ information, is a NACK. Similarly, if the terminal device receives only the second transport block but does not receive the first transport block, the terminal device determines that a decoding result of the first transport block, namely, the first HARQ information, is a NACK.

A second manner of performing the linear OR operation is:
In one manner, data information in the transport block is divided into at least one code block (code block, CB). The transport block includes at least one CBG (code block group, CBG), and one CBG includes at least one CB. A specific quantity of CBGs included in each transport block and a specific quantity of CBs included in each CBG are not limited in this application scenario.

In this manner, an example in which the first transport block includes one CBG and the second transport block includes one CBG is used for description. For a specific manner in which the terminal device performs the linear OR operation on the first HARQ information and the second HARQ information, still refer to Table 4.

It can be learned that, provided that at least one of the CBG included in the first transport block and the CBG included in the second transport block is successfully decoded (as shown in the second row to the fourth row in Table 4), after performing the linear OR operation, the terminal device determines that the target HARQ information is an ACK, in other words, the data information carried in the first transport block and the data information carried in the second transport block are successfully received. When the terminal device determines that each of the CBG included in the first transport block and the CBG included in the second transport block fails to be decoded (as shown in the fifth row in Table 4), after performing the linear OR operation, the terminal device determines that the target HARQ information is a NACK, in other words, the data information carried in the first transport block and the data information carried in the second transport block fail to be received.

If the terminal device receives only the first transport block but does not receive the second transport block, the terminal device determines that a decoding result of the CBG included in the second transport block, namely, the second HARQ information, is a NACK. Similarly, if the terminal device receives only the second transport block but does not receive the first transport block, the terminal device determines that a decoding result of the CBG included in the first transport block, namely, the first HARQ information, is a NACK.

A third manner of performing the linear OR operation is:
A difference between this manner and the second manner lies in that the first transport block shown in this manner includes at least two CBGs, and the second transport block includes at least two CBGs.

For example, the terminal device divides the data information of the first transport block into at least two CBGs, and divides the data information of the second transport block into at least two CBGs.

For example, the first transport block and the second transport block include a same quantity of CBGs, and/or CBGs that have a same CBG index and that are included in the first transport block and the second transport block include a same quantity of CBs, and/or CBGs that have a same CBG index and that are included in the first transport block and the second transport block carry same data information.

The first transport block includes two CBGs (a CBG 1 and a CBG 2), and the second transport block also includes two CBGs (a CBG 1 and a CBG 2). The CBG 1 of the first transport block and the CBG 1 of the second transport block carry same data information, and the CBG 2 of the first transport block and the CBG 2 of the second transport block carry same data information.

It can be learned that in this manner, 2-bit information can be fed back for each of the first transport block and the second transport block. For a specific manner in which the terminal device performs the linear OR operation on the first HARQ information and the second HARQ information, refer to Table 5.

**Table 5**

| First HARQ information | Second HARQ information | Target HARQ information |
|---|---|---|
| ACK (CBG 1), | ACK (CBG 1), | ACK (CBG 1), |
| ACK (CBG 2) | ACK (CBG 2) | ACK (CBG 2) |
| ACK (CBG 1), | ACK (CBG 1), | |
| ACK (CBG 2) | NACK (CBG 2) | |
| ACK (CBG 1), | NACK (CBG 1), | |
| ACK (CBG 2) | ACK (CBG 2) | |
| ACK (CBG 1), | NACK (CBG 1), | |
| ACK (CBG 2) | NACK (CBG 2) | |
| ACK (CBG 1), | ACK (CBG 1), | |
| NACK (CBG 2) | ACK (CBG 2) | |
| ACK (CBG 1), | NACK (CBG 1), | |
| NACK (CBG 2) | ACK (CBG 2) | |
| ACK (CBG 1), | ACK (CBG 1), | ACK (CBG 1), |
| NACK (CBG 2) | NACK (CBG 2) | NACK (CBG 2) |
| ACK (CBG 1), | NACK (CBG 1), | ACK (CBG 1), |
| NACK (CBG 2) | NACK (CBG 2) | NACK (CBG 2) |
| NACK (CBG 1), | ACK (CBG 1), | ACK (CBG 1), |
| ACK (CBG 2) | ACK (CBG 2) | ACK (CBG 2) |
| NACK (CBG 1), | ACK (CBG 1), | ACK (CBG 1), |
| ACK (CBG 2) | NACK (CBG 2) | NACK (CBG 2) |
| NACK (CBG 1), | NACK (CBG 1), | NACK (CBG 1), |
| ACK (CBG 2) | ACK (CBG 2) | ACK (CBG 2) |
| NACK (CBG 1), | NACK (CBG 1), | |
| ACK (CBG 2) | NACK (CBG 2) | |
| NACK (CBG 1), | ACK (CBG 1), | ACK (CBG 1), |
| NACK (CBG 2) | ACK (CBG 2) | ACK (CBG 2) |
| NACK (CBG 1), | ACK (CBG 1), | ACK (CBG 1), |
| NACK (CBG 2) | NACK (CBG 2) | NACK (CBG 2) |
| NACK (CBG 1), | NACK (CBG 1), | NACK (CBG 1), |
| NACK (CBG 2) | ACK (CBG 2) | ACK (CBG 2) |
| NACK (CBG 1), | NACK (CBG 1), | NACK (CBG 1), |
| NACK (CBG 2) | NACK (CBG 2) | NACK (CBG 2) |

For example, as shown in the second row in Table 5, the CBG 1 and the CBG 2 of the first transport block are successfully decoded, feedback information corresponding to the CBG 1 is an ACK, and feedback information corresponding to the CBG 2 is an ACK. The CBG 1 and the CBG 2 of the second transport block are successfully decoded, feedback information corresponding to the CBG 1 is an ACK, and feedback information corresponding to the CBG 2 is an ACK. After performing the linear OR operation, the terminal device determines that in the target HARQ information, the feedback information corresponding to the CBG 1 is an ACK, and the feedback information corresponding to the CBG 2 is an ACK.

For example, as shown in the eighth row in Table 5, the CBG 1 of the first transport block is successfully decoded and the CBG 2 of the first transport block fails to be decoded, feedback information corresponding to the CBG 1 is an ACK, and feedback information corresponding to the CBG 2 is a NACK. The CBG 1 of the second transport block fails to be decoded and the CBG 2 of the second transport block fails to be decoded, feedback information corresponding to the CBG 1 is a NACK, and feedback information corresponding to the CBG 2 is a NACK. After performing the linear OR operation, the terminal device determines that in the target HARQ information, the feedback information corresponding to the CBG 1 is an ACK, and the feedback information corresponding to the CBG 2 is a NACK.

It can be learned by analogy that, provided that the terminal device determines that at least one of the CBG 1 included in the first transport block and the CBG 1 included in the second transport block is successfully decoded, after performing the linear OR operation, the terminal device determines that in the target HARQ information, the feedback information corresponding to the CBG 1 is an ACK. However, when the terminal device determines that each of the CBG 1 included in the first transport block and the CBG 1 included in the second transport block fails to be decoded, after performing the linear OR operation, the terminal device determines that in the target HARQ information, the feedback information corresponding to the CBG 1 is a NACK. Likewise, provided that the terminal device determines that at least one of the CBG 2 included in the first transport block and the CBG 2 included in the second transport block is successfully decoded, after performing the linear OR operation, the terminal device determines that in the target HARQ information, the feedback information corresponding to the CBG 2 is an ACK. However, when the terminal device determines that each of the CBG 2 included in the first transport block and the CBG 2 included in the second transport block fails to be decoded, after performing the linear OR operation, the terminal device determines that in the target HARQ information, the feedback information corresponding to the CBG 2 is a NACK.

If the terminal device receives only the first transport block but does not receive the second transport block, the terminal device determines that a decoding result of each CBG included in the second transport block is a NACK. Similarly, if the terminal device receives only the second transport block but does not receive the first transport block, the terminal device determines that a decoding result of each CBG included in the first transport block is a NACK.

As shown above, the target HARQ information is used to indicate whether the terminal device successfully decodes the first transport block and/or the second transport block. For example, the target HARQ information may be further used to indicate whether the terminal device successfully determines data information corresponding to the target TBS.

Step 1013: The terminal device sends the target HARQ information based on the DCI.

Step 1014: The network device receives the target HARQ information.

The network device determines, based on the target HARQ information, whether the first transport block and/or the second transport block are/is successfully decoded by the terminal device.

As shown in this application scenario, the network device sends the first transport block to the terminal device by using the first TRP, and sends the second transport block to the terminal device by using the second TRP, and the first transport block and the second transport block carry the same data information. However, due to a rapid change of a spatial channel, an instantaneous channel environment of the first TRP is different from an instantaneous channel environment of the second TRP. In other words, time-frequency domain resources used by the first TRP and the second TRP to send the first transport block to the terminal device are different, or MCS information sent by the first TRP and MCS information sent by the second TRP to the terminal device are different. According to the current technology, if a TBS calculated by the terminal device for the first transport block is different from a TBS calculated by the terminal device for the second transport block, the terminal device cannot determine the TBS, and a probability that the terminal device fails to decode the first transport block and/or the second transport block is increased. However, as shown in this application scenario, the terminal device directly decodes the first transport block and the second transport block based on the target TBS, thereby effectively ensuring a success rate of decoding the first transport block and/or the second transport block. In addition, the transport block is received by using the two TRPs, thereby improving transmission reliability of the transport block, and this application scenario is more applicable to ultra-reliable and low-latency communication URLLC in an NR system.

It should be noted that Table 1 to Table 5 are referenced in the foregoing embodiment, and any one of the tables may include fewer rows or more rows shown above. This is not specifically limited. For example, Table 3 may reserve only the first row, or Table 3 may reserve only the second row, or Table 3 may reserve only the third row, or Table 3 may reserve only the fourth row, or Table 3 may reserve only the content of the first row and the second row, or Table 3 may reserve only the content of the first row and the third row, or Table 3 may reserve only the content of the first row and the fourth row, or Table 3 may reserve only the content of the second row and the third row, or Table 3 may reserve only the content of the second row and the fourth row, or Table 3 may reserve only the content of the third row and the fourth row, or Table 3 may reserve only the content of the first row, the second row, and the third row, or Table 3 may reserve only the content of the first row, the second row, and the fourth row, or Table 3 may reserve only the content of the second row, the third row, and the fourth row. This is not specifically limited herein. To save space, content of each of Table 1 to Table 5 is not described by using examples one by one.

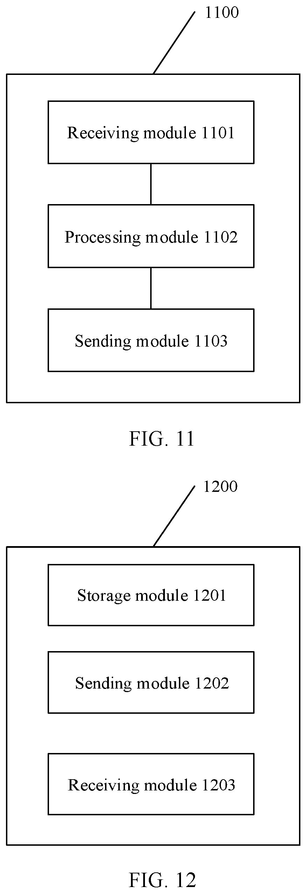

The following describes, with reference to FIG. 11, a specific structure of an information transmission apparatus 1100 provided in this application.

As shown in FIG. 11, the information transmission apparatus includes:
a receiving module 1101, configured to receive downlink control information DCI, where the DCI is used to indicate a first transport block and a second transport block; and
a processing module 1102, configured to obtain a target transport block size TBS, where each of a TBS that corresponds to the first transport block indicated by the DCI received by the receiving module 1101 and a TBS that corresponds to the second transport block indicated by the DCI received by the receiving module 1101 is the target TBS.

The receiving module 1101 is further configured to receive the first transport block and/or the second transport block based on the DCI received by the receiving module 1101 and the target TBS obtained by the processing module 1102.

Optionally, in a process in which the processing module 1102 is configured to obtain the target transport block size TBS, the processing module 1102 is further configured to determine a reference transport block, where the reference transport block is one of the first transport block and the second transport block that are indicated by the DCI received by the receiving module 1101.

The processing module 1102 is further configured to obtain the target TBS based on a reference TBS corresponding to the reference transport block.

Optionally, in a process in which the processing module 1102 is configured to determine the reference transport block, the processing module 1102 is further configured to determine the reference transport block based on indication information, and the indication information includes at least one of the following: higher layer signaling used to indicate the reference transport block, modulation and coding scheme MCS information corresponding to the first transport block, MCS information corresponding to the second transport block, or information that is included in the DCI received by the receiving module 1101 and that is used to indicate the reference transport block.

Optionally, the processing module 1102 determines that the indication information includes the MCS information corresponding to the first transport block and/or the MCS information corresponding to the second transport block, and in a process in which the processing module 1102 is configured to determine the reference transport block based on the indication information, the processing module 1102 is further configured to determine preset MCS information.

When the MCS information corresponding to the first transport block and/or the MCS information corresponding to the second transport block are/is the same as the preset MCS information, the processing module 1102 is further configured to determine the reference transport block.

Optionally, the processing module 1102 determines that the indication information includes the MCS information corresponding to the first transport block and the MCS information corresponding to the second transport block, and in a process in which the processing module 1102 is configured to determine the reference transport block based on the indication information,
the processing module 1102 is further configured to determine, based on the MCS information that corresponds to the first transport block and that is included in the indication information, a reference TBS that is indicated by the DCI received by the receiving module 1101 and that corresponds to the first transport block.

The processing module 1102 is further configured to determine, based on the MCS information that corresponds to the second transport block and that is included in the indication information, a reference TBS that is indicated by the DCI received by the receiving module 1101 and that corresponds to the second transport block.

The processing module 1102 is further configured to determine the reference transport block based on the reference TBS corresponding to the first transport block and the reference TBS corresponding to the second transport block.

Optionally, in a process in which the processing module 1102 is configured to obtain the target TBS,
the processing module 1102 is further configured to determine the target TBS based on higher layer signaling received by the receiving module 1101, where the target TBS is one of at least one predefined preset TBS; or
the processing module 1102 is further configured to determine the target TBS based on the DCI received by the receiving module 1101, where the target TBS is one of at least one predefined preset TBS; or
the processing module 1102 is further configured to: determine at least one preset TBS based on higher layer signaling received by the receiving module 1101, and determine the target TBS based on the DCI received by the receiving module 1101, where the target TBS is one of the at least one preset TBS.

Optionally, the processing module 1102 is further configured to determine preset MCS information, and in a process in which the processing module 1102 is configured to obtain the target transport block size TBS,
when MCS information of the first transport block is the same as the preset MCS information, the processing module 1102 is further configured to determine that the target TBS is equal to a preset TBS; and/or when MCS information of the second transport block is the same as the preset MCS information, the processing module 1102 is further configured to determine that the target TBS is equal to the preset TBS, where the preset TBS is predefined by the processing module 1102 and/or is configured by using higher layer signaling received by the receiving module 1101.

Optionally, the processing module 1102 is further configured to generate notification information, where the notification information is used to notify a capability of receiving a first transport block and a second transport block that correspond to a same TBS.

The information transmission apparatus further includes a sending module 1103.

The sending module 1103 is configured to send the notification information generated by the processing module 1102.

Optionally, the receiving module 1101 is further configured to receive configuration information, where the configuration information is used to configure to be capable of receiving a first transport block and a second transport block that correspond to a same TBS.

Optionally, the processing module 1102 is further configured to perform a linear OR operation on hybrid automatic repeat request HARQ information corresponding to the first transport block received by the receiving module 1101 and HARQ information corresponding to the second transport block received by the receiving module 1101, to obtain target HARQ information, where the target HARQ information is used to indicate whether the receiving module 1101 successfully receives the first transport block and/or the second transport block.

The sending module 1103 is further configured to send, based on the DCI received by the receiving module 1101, the target HARQ information obtained by the processing module 1102.

Optionally, the processing module 1102 is further configured to determine that the first transport block is a transport block corresponding to initial transmission, and the second transport block is a transport block corresponding to retransmission.

Optionally, in a process in which the receiving module 1101 is configured to receive the first transport block and/or the second transport block based on the DCI received by the receiving module 1101 and the target TBS obtained by the processing module 1102, the receiving module 1101 is further configured to: combine information that corresponds to the first transport block indicated by the DCI received by the receiving module 1101 and information that corresponds to the second transport block indicated by the DCI received by the receiving module 1101, to obtain combined information.

The receiving module 1101 is further configured to decode the combined information.

The information transmission apparatus shown in this embodiment may be configured to perform the information transmission method shown in the foregoing embodiment. For a specific execution process, refer to the specific process in which the terminal device performs the information transmission method shown in the foregoing embodiment. Details are not described in this embodiment again.

The information transmission apparatus provided in FIG. 11 may be used as a terminal device to perform the information transmission method shown in the foregoing embodiment. The information transmission apparatus provided in FIG. 12 may be used as a network device to indicate the information transmission method shown in the foregoing embodiment. A structure of the information transmission apparatus 1200 is shown as follows:
a storage module 1201, configured to store a program and an instruction that are necessary; and
a sending module 1202, configured to send downlink control information DCI, where the DCI is used to indicate a first transport block and a second transport block, and each of a transport block size TBS corresponding to the first transport block and a TBS corresponding to the second transport block is a target TBS.

The sending module 1202 is further configured to send the first transport block and the second transport block based on the DCI sent by the sending module 1202.

Optionally, the sending module 1202 is further configured to send indication information, where the indication information is used to indicate a reference transport block, and the reference transport block is one of the first transport block and the second transport block that are indicated by the DCI.

The indication information includes at least one of the following: higher layer signaling used to indicate the reference transport block, modulation and coding scheme MCS information corresponding to the first transport block, MCS information corresponding to the second transport block, or information that is included in the DCI and that is used to indicate the reference transport block.

Optionally, the indication information sent by the sending module 1202 includes the MCS information corresponding to the first transport block and/or the MCS information corresponding to the second transport block, and the indication information sent by the sending module 1202 is further used to indicate that the MCS information corresponding to the first transport block and/or the MCS information corresponding to the second transport block are/is the same as preset MCS information.

Optionally, the indication information sent by the sending module 1202 includes the MCS information corresponding to the first transport block and the MCS information corresponding to the second transport block, the MCS information corresponding to the first transport block is used to indicate a reference TBS corresponding to the first transport block, the MCS information corresponding to the second transport block is used to indicate a reference TBS corresponding to the second transport block, and the reference TBS corresponding to the first transport block and the reference TBS corresponding to the second transport block are used to indicate the reference transport block.

Optionally, the sending module 1202 is further configured to send higher layer signaling, the higher layer signaling is used to indicate the target TBS, and the target TBS is one of at least one predefined preset TBS.

Alternatively, the sending module 1202 is further configured to send higher layer signaling, where the higher layer signaling is used to indicate at least one preset TBS, the DCI is used to indicate the target TBS, and the target TBS is one of the at least one preset TBS.

Optionally, the DCI sent by the sending module 1202 is further used to indicate the target TBS, and the target TBS is one of at least one predefined preset TBS.

Optionally, MCS information of the first transport block sent by the sending module 1202 is the same as preset MCS information, and the target TBS is equal to a preset TBS; and/or MCS information of the second transport block sent by the sending module 1202 is the same as the preset MCS information, and the target TBS is equal to the preset TBS.

The preset TBS is predefined and/or is indicated by higher layer signaling that is sent by the sending module 1202.

Optionally, the network device further includes a receiving module 1203.

The receiving module 1203 is configured to receive notification information, where the notification information is used to notify a capability of receiving a first transport block and a second transport block that correspond to a same TBS.

Optionally, the sending module 1202 is further configured to send configuration information, where the configuration information is used to configure to be capable of receiving a first transport block and a second transport block that correspond to a same TBS.

Optionally, the receiving module 1203 is configured to receive target HARQ information, where the target HARQ information is used to indicate whether the first transport block and/or the second transport block are/is successfully received.

The information transmission apparatus shown in this embodiment may be configured to perform the information transmission method shown in the foregoing embodiment. For a specific execution process, refer to the specific process in which the network device performs the information transmission method shown in the foregoing embodiment. Details are not described in this embodiment again.

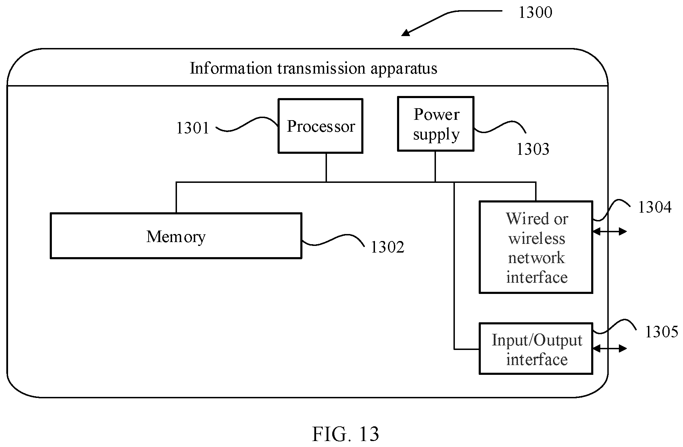

The following describes, with reference to FIG. 13, a specific structure of the information transmission apparatus from a perspective of entity hardware.

FIG. 13 is a schematic structural diagram of an information transmission apparatus according to an embodiment of the present invention. The information transmission apparatus 1300 may differ greatly due to different configurations or performance, and may include one or more processors 1301 and one or more memories 1302.

The processor 1301 is connected to the memory 1302.

Specifically, the memory 1302 may be transient storage or persistent storage. A program stored in the memory 1302 may include a series of target instructions.

Still further, the processor 1301 communicates with the memory 1302. When the information transmission apparatus 1300 executes, by using the processor 1301, the series of target instructions stored in the memory 1302, the information transmission apparatus can perform the information transmission method shown in this application. For a specific execution process, refer to the foregoing embodiment. Details are not described in this embodiment again.

The information transmission apparatus 1300 may further include one or more power supplies 1303, one or more wired or wireless network interfaces 1304, and one or more input/output interfaces 1305.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, and an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the claims

## Claims

1. An information transmission method performed by a terminal device, the method comprising the steps of:
a.) sending (step 1001) notification information to a network device, wherein the notification information is used to notify the network device that the terminal device has a capability of receiving a first transport block and a second transport block that correspond to a same transport block size, TBS;
b.) receiving (step 1004) configuration information from the network device, wherein the configuration information is used to configure the terminal device to be capable of receiving the first transport block and the second transport block that correspond to the same TBS;
c.) receiving (step 302, step 1007) downlink control information, DCI, from the network device, wherein the DCI is used to indicate the first transport block and the second transport block;
d.) obtaining (step 304, step 1010) a target TBS, wherein each of a TBS corresponding to the first transport block and a TBS corresponding to the second transport block is the target TBS; and
e.) receiving (step 305, step 1011) the first transport block and the second transport block based on the DCI and based on the obtained target TBS from the network device.

2. The method according to claim 1, wherein the obtaining the target TBS comprises:
• determining a reference transport block, wherein the reference transport block is one of the first transport block and the second transport block; and
• obtaining the target TBS based on a reference TBS corresponding to the reference transport block.

3. The method according to claim 2, wherein the determining the reference transport block comprises:
• determining the reference transport block based on indication information, wherein the indication information comprises at least one of the following: higher layer signaling used to indicate the reference transport block, modulation and coding scheme, MCS, information corresponding to the first transport block, MCS information corresponding to the second transport block, or information that is comprised in the DCI and that is used to indicate the reference transport block.

4. The method according to claim 3, wherein the indication information comprises the MCS information corresponding to the first transport block and/or the MCS information corresponding to the second transport block, and the determining the reference transport block based on indication information comprises:
• determining preset MCS information; and
• when the MCS information corresponding to the first transport block and/or the MCS information corresponding to the second transport block are/is the same as the preset MCS information, determining the reference transport block.

5. The method according to any one of claims 1 to 4, wherein the method further comprises:
• performing a linear OR operation on hybrid automatic repeat request, HARQ, information corresponding to the first transport block and HARQ information corresponding to the second transport block, to obtain target HARQ information, wherein the target HARQ information is used to indicate whether the terminal device successfully receives the first transport block and/or the second transport block; and
• sending the target HARQ information based on the DCI to the network device.

6. An information transmission method performed by a network device, the method comprising the steps of:
a.) receiving (step 1002) notification information from a terminal device, wherein the notification information is used to notify the network device that the terminal device has a capability of receiving a first transport block and a second transport block that correspond to a same transport block size, TBS;
**b.)** sending (step 1003) configuration information to the terminal device, wherein the configuration information is used to configure the terminal device to be capable of receiving the first transport block and the second transport block that correspond to the same TBS;
**c.)** sending (step 301, step 1005, step 1006) downlink control information, DCI, to the terminal device, wherein the DCI is used to indicate the first transport block and the second transport block, and each of a transport block size, TBS, corresponding to the first transport block and a TBS corresponding to the second transport block is a target TBS; and
**d.)** sending (step 303) the first transport block and the second transport block based on the DCI to the terminal device.

7. The method according to claim 6, wherein the method further comprises:
• sending indication information to the terminal device, wherein the indication information is used to indicate a reference transport block, and the reference transport block is one of the first transport block and the second transport block; and
the indication information comprises at least one of the following: higher layer signaling used to indicate the reference transport block, modulation and coding scheme, MCS, information corresponding to the first transport block, MCS information corresponding to the second transport block, or information that is comprised in the DCI and that is used to indicate the reference transport block.

8. The method according to claim 7, wherein the indication information comprises the MCS information corresponding to the first transport block and/or the MCS information corresponding to the second transport block, and the indication information is further used to indicate that the MCS information corresponding to the first transport block and/or the MCS information corresponding to the second transport block are/is the same as preset MCS information.

9. The method according to claim 7, wherein the indication information comprises the MCS information corresponding to the first transport block and the MCS information corresponding to the second transport block, the MCS information corresponding to the first transport block is used to indicate a reference TBS corresponding to the first transport block, the MCS information corresponding to the second transport block is used to indicate a reference TBS corresponding to the second transport block, and the reference TBS corresponding to the first transport block and the reference TBS corresponding to the second transport block are used to indicate the reference transport block.

10. The method according to any one of claims 6 to 9, wherein the method further comprises:
• receiving target HARQ information from the terminal device, wherein the target HARQ information is used to indicate whether the terminal device successfully receives the first transport block and/or the second transport block.

11. A terminal device configured to perform any of the methods according to claims 1 - 5.

12. A network device configured to perform any of the methods according to claims 6 - 10.

## Patentansprüche

1. Informationsübertragungsverfahren, das durch eine Endgerätevorrichtung durchgeführt wird, wobei das Verfahren die folgenden Schritte umfasst:
a.) Senden (Schritt 1001) von Benachrichtigungsinformationen an eine Netzwerkvorrichtung, wobei die Benachrichtigungsinformationen verwendet werden, um die Netzwerkvorrichtung darüber zu benachrichtigen, dass die Endgerätevorrichtung eine Fähigkeit zum Empfangen eines ersten Transportblocks und eines zweiten Transportblocks, die einer gleichen Transportblockgröße bzw. TBS entsprechen, aufweist;
b.) Empfangen (Schritt 1004) von Konfigurationsinformationen von der Netzwerkvorrichtung, wobei die Konfigurationsinformationen verwendet werden, um die Endgerätevorrichtung dazu zu konfigurieren, in der Lage zu sein, den ersten Transportblock und den zweiten Transportblock, die der gleichen TBS entsprechen, zu empfangen;
c.) Empfangen (Schritt 302, Schritt 1007) von Downlink-Steuerinformationen bzw. DCI von der Netzwerkvorrichtung, wobei die DCI verwendet werden, um den ersten Transportblock und den zweiten Transportblog anzugeben;
d.) Erhalten (Schritt 304, Schritt 1010) einer Ziel-TBS, wobei es sich bei sowohl einer dem ersten Transportblock entsprechenden TBS als auch einer dem zweiten Transportblock entsprechenden TBS um die Ziel-TBS handelt; und
e.) Empfangen (Schritt 305, Schritt 1011) des ersten Transportblocks und des zweiten Transportblocks basierend auf den DCI und basierend auf der erhaltenen Ziel-TBS von der Netzwerkvorrichtung.

2. Verfahren nach Anspruch 1, wobei das Erhalten der Ziel-TBS Folgendes umfasst:
• Bestimmen eines Referenztransportblocks, wobei der Referenztransportblock einer des ersten Transportblocks und des zweiten Transportblocks ist; und
• Erhalten der Ziel-TBS basierend auf einer dem Referenztransportblock entsprechenden Referenz-TBS.

3. Verfahren nach Anspruch 2, wobei das Bestimmen des Referenztransportblocks Folgendes umfasst:
• Bestimmen des Referenztransportblocks basierend auf Angabeinformationen, wobei die Angabeinformationen mindestens eines der Folgenden umfassen: eine Signalisierung höherer Schicht, die verwendet wird, um den Referenztransportblock anzugeben, Modulations-und-Codierungsschema- bzw. MCS-Informationen, die dem ersten Transportblock entsprechen, MCS-Informationen, die dem zweiten Transportblock entsprechen, oder Informationen, die in den DCI enthalten sind und die verwendet werden, um den Referenztransportblock anzugeben.

4. Verfahren nach Anspruch 3, wobei die Angabeinformationen die dem ersten Transportblock entsprechenden MCS-Informationen und/oder die dem zweiten Transportblock entsprechenden MCS-Informationen umfassen und das Bestimmen des Referenztransportblocks basierend auf Angabeinformationen Folgendes umfasst:
• Bestimmen von voreingestellten MCS-Informationen, und
• wenn die dem ersten Transportblock entsprechenden MCS-Informationen und/oder die dem zweiten Transportblock entsprechenden MCS-Informationen gleich den voreingestellten MCS-Informationen sind, Bestimmen des Referenztransportblocks.

5. Verfahren nach einem der Ansprüche 1 bis 4, wobei das Verfahren ferner Folgendes umfasst:
• Durchführen einer linearen OR-Operation an dem ersten Transportblock entsprechenden "Hybrid-Automatic-Repeat-Request"- bzw. HARQ-Informationen und dem zweiten Transportblock entsprechenden HARQ-Informationen, um Ziel-HARQ-Informationen zu erhalten, wobei die Ziel-HARQ-Informationen verwendet werden, um anzugeben, ob die Endgerätevorrichtung den ersten Transportblock und/oder den zweiten Transportblock erfolgreich empfängt; und
• Senden der Ziel-HARQ-Informationen basierend auf den DCI an die Netzwerkvorrichtung.

6. Informationsübertragungsverfahren, das durch eine Netzwerkvorrichtung durchgeführt wird, wobei das Verfahren die folgenden Schritte umfasst:
a.) Empfangen (Schritt 1002) von Benachrichtigungsinformationen von einer Endgerätevorrichtung, wobei die Benachrichtigungsinformationen verwendet werden, um die Netzwerkvorrichtung darüber zu benachrichtigen, dass die Endgerätevorrichtung eine Fähigkeit zum Empfangen eines ersten Transportblocks und eines zweiten Transportblocks, die einer gleichen Transportblockgröße bzw. TBS entsprechen, aufweist;
b.) Senden (Schritt 1003) von Konfigurationsinformationen an die Endgerätevorrichtung, wobei die Konfigurationsinformationen verwendet werden, um die Endgerätevorrichtung dazu zu konfigurieren, in der Lage zu sein, den ersten Transportblock und den zweiten Transportblock, die der gleichen TBS entsprechen, zu empfangen;
c.) Senden (Schritt 301, Schritt 1005, Schritt 1006) von Downlink-Steuerinformationen bzw. DCI an die Endgerätevorrichtung, wobei die DCI verwendet werden, um den ersten Transportblock und den zweiten Transportblog anzugeben und wobei es sich bei sowohl einer dem ersten Transportblock entsprechenden Transportblockgröße bzw. TBS als auch einer dem zweiten Transportblock entsprechenden TBS um eine Ziel-TBS handelt; und
e.) Senden (Schritt 303) des ersten Transportblocks und des zweiten Transportblocks basierend auf den DCI an die Endgerätevorrichtung.

7. Verfahren nach Anspruch 6, wobei das Verfahren ferner Folgendes umfasst:
• Senden von Angabeinformationen an die Endgerätevorrichtung, wobei die Angabeinformationen verwendet werden, um einen Referenztransportblock anzugeben, und der Referenztransportblock einer des ersten Transportblocks und des zweiten Transportblocks ist; und
wobei die Angabeinformationen mindestens eines der Folgenden umfassen: eine Signalisierung höherer Schicht, die verwendet wird, um den Referenztransportblock anzugeben, Modulations-und-Codierungsschema- bzw. MCS-Informationen, die dem ersten Transportblock entsprechen, MCS-Informationen, die dem zweiten Transportblock entsprechen, oder Informationen, die in den DCI enthalten sind und die verwendet werden, um den Referenztransportblock anzugeben.

8. Verfahren nach Anspruch 7, wobei die Angabeinformationen die dem ersten Transportblock entsprechenden MCS-Informationen und/oder die dem zweiten Transportblock entsprechenden MCS-Informationen umfassen und die Angabeinformationen ferner verwendet werden, um anzugeben, dass die dem ersten Transportblock entsprechenden MCS-Informationen und/oder die dem zweiten Transportblock entsprechenden MCS-Informationen gleich den voreingestellten MCS-Informationen sind.

9. Verfahren nach Anspruch 7, wobei die Angabeinformationen die dem ersten Transportblock entsprechenden MCS-Informationen und die dem zweiten Transportblock entsprechenden MCS-Informationen umfassen, die dem ersten Transportblock entsprechenden MCS-Informationen verwendet werden, um eine dem ersten Transportblock entsprechende Referenz-TBS anzugeben, die dem zweiten Transportblock entsprechenden MCS-Informationen verwendet werden, um eine dem zweiten Transportblock entsprechende Referenz-TBS anzugeben, und die dem ersten Transportblock entsprechende Referenz-TBS und die dem zweiten Transportblock entsprechende Referenz-TBS verwendet werden, um den Referenztransportblock anzugeben.

10. Verfahren nach einem der Ansprüche 6 bis 9, wobei das Verfahren ferner Folgendes umfasst:
• Empfangen von Ziel-HARQ-Informationen von der Endgerätevorrichtung, wobei die Ziel-HARQ-Informationen verwendet werden, um anzugeben, ob die Endgerätevorrichtung den ersten Transportblock und/oder den zweiten Transportblock erfolgreich empfängt.

11. Endgerätevorrichtung, ausgelegt zum Durchführen eines der Verfahren nach den Ansprüchen 1 bis 5.

12. Netzwerkvorrichtung, ausgelegt zum Durchführen eines der Verfahren nach den Ansprüchen 6 bis 10.

## Revendications

1. Procédé de transmission d'informations réalisé par un dispositif terminal, le procédé comprenant les étapes suivantes :
a.) l'envoi (étape 1001) d'informations de notification à un dispositif de réseau, dans lequel les informations de notification servent à notifier au dispositif de réseau que le dispositif terminal dispose d'une capabilité de réception d'un premier bloc de transport et d'un second bloc de transport qui correspondent à une même taille de bloc de transport, TBS ;
b.) la réception (étape 1004) d'informations de configuration en provenance du dispositif de réseau, dans lequel les informations de configuration servent à configurer le dispositif terminal pour qu'il soit capable de recevoir le premier bloc de transport et le second bloc de transport qui correspondent à la même TBS ;
c.) la réception (étape 302, étape 1007) d'informations de commande de liaison descendante, DCI, en provenance du dispositif de réseau, dans lequel les DCI servent à indiquer le premier bloc de transport et le second bloc de transport ;
d.) l'obtention (étape 304, étape 1010) d'une TBS cible, dans lequel chacune d'une TBS correspondant au premier bloc de transport et d'une TBS correspondant au second bloc de transport est la TBS cible ; et
e.) la réception (étape 305, étape 1011) du premier bloc de transport et du second bloc de transport sur la base des DCI et sur la base de la TBS cible obtenue auprès du dispositif de réseau.

2. Procédé selon la revendication 1, dans lequel l'obtention de la TBS cible comprend :
la détermination d'un bloc de transport de référence, dans lequel le bloc de transport de référence est l'un du premier bloc de transport et du second bloc de transport ; et
l'obtention de la TBS cible sur la base d'une TBS de référence correspondant au bloc de transport de référence.

3. Procédé selon la revendication 2, dans lequel la détermination du bloc de transport de référence comprend :
la détermination du bloc de transport de référence sur la base d'informations d'indication, dans lequel les informations d'indication comprennent d'au moins l'un des éléments suivants : une signalisation de couche supérieure servant à indiquer le bloc de transport de référence, des informations de plan de modulation et codage, MCS, correspondant au premier bloc de transport, des informations de MCS correspondant au second bloc de transport, ou des informations comprises dans les DCI et qui servent à indiquer le bloc de transport de référence.

4. Procédé selon la revendication 3, dans lequel les informations d'indication comprennent les informations de MCS correspondant au premier bloc de transport et/ou les informations de MCS correspondant au second bloc de transport, et la détermination du bloc de transport de référence sur la base d'informations d'indication comprend :
la détermination d'informations de MCS prédéfinies ; et
lorsque les informations de MCS correspondant au premier bloc de transport et/ou les informations de MCS correspondant au second bloc de transport sont identiques aux informations de MCS prédéfinies, la détermination du bloc de transport de référence.

5. Procédé selon l'une quelconque des revendications 1 à 4, le procédé comprenant en outre :
la réalisation d'une opération OU linéaire sur des informations de demande de répétition automatique hybride, HARQ, correspondant au premier bloc de transport et des informations de HARQ correspondant au second bloc de transport, afin d'obtenir des informations de HARQ cibles, dans lequel les informations de HARQ cibles servent à déterminer que le dispositif terminal reçoit ou non avec succès le premier bloc de transport et/ou le second bloc de transport ; et
l'envoi des informations de HARQ cibles sur la base des DCI au dispositif de réseau.

6. Procédé de transmission d'informations réalisé par un dispositif de réseau, le procédé comprenant les étapes suivantes :
a.) la réception (étape 1002) d'informations de notification en provenance d'un dispositif terminal, dans lequel les informations de notification servent à notifier au dispositif de réseau que le dispositif terminal dispose d'une capabilité de réception d'un premier bloc de transport et d'un second bloc de transport qui correspondent à une même taille de bloc de transport, TBS ;
b.) l'envoi (étape 1003) d'informations de configuration au dispositif terminal, dans lequel les informations de configuration servent à configurer le dispositif terminal pour qu'il soit capable de recevoir le premier bloc de transport et le second bloc de transport qui correspondent à une même taille de bloc de transport, TBS ;
c.) l'envoi (étape 301, étape 1005, étape 1006) d'informations de commande de liaison descendante, DCI, au dispositif terminal, dans lequel les DCI servent à indiquer le premier bloc de transport et le second bloc de transport, et chacune d'une taille de bloc de transport, TBS, correspondant au premier bloc de transport et d'une TBS correspondant au second bloc de transport est une TBS cible ; et
d.) l'envoi (étape 303) du premier bloc de transport et du second bloc de transport sur la base des DCI au dispositif terminal.

7. Procédé selon la revendication 6, le procédé comprenant en outre :
• l'envoi d'informations d'indication au dispositif terminal, dans lequel les informations d'indication servent à indiquer un bloc de transport de référence, et le bloc de transport de référence est l'un du premier bloc de transport et du second bloc de transport ; et les informations d'indication comprennent au moins l'un des éléments suivants : une signalisation de couche supérieure servant à indiquer le bloc de transport de référence, des informations de plan de modulation et codage, MCS, correspondant au premier bloc de transport, des informations de MCS correspondant au second bloc de transport, ou des informations comprises dans les DCI et servant à indiquer le bloc de transport de référence.

8. Procédé selon la revendication 7, dans lequel les informations d'indication comprennent les informations de MCS correspondant au premier bloc de transport et/ou les informations de MCS correspondant au second bloc de transport, et les informations d'indication servent en outre à indiquer que les informations de MCS correspondant au premier bloc de transport et/ou les informations de MCS correspondant au second bloc de transport sont identiques à des informations de MCS prédéfinies.

9. Procédé selon la revendication 7, dans lequel les informations d'indication comprennent les informations de MCS correspondant au premier bloc de transport et les informations de MCS correspondant au second bloc de transport, les informations de MCS correspondant au premier bloc de transport servent à indiquer une TBS de référence correspondant au premier bloc de transport, les informations de MCS correspondant au second bloc de transport servent à indiquer une TBS de référence correspondant au second bloc de transport, et la TBS de référence correspondant au premier bloc de transport et la TBS de référence correspondant au second bloc de transport servent à indiquer le bloc de transport de référence.

10. Procédé selon l'une quelconque des revendications 6 à 9, le procédé comprenant en outre :
• la réception d'informations de HARQ cibles en provenance du dispositif terminal, dans lequel les informations de HARQ cibles servent à indiquer que le dispositif terminal reçoit ou non avec succès le premier bloc de transport et/ou le second bloc de transport.

11. Dispositif terminal configuré pour réaliser l'un quelconque des procédés selon les revendications 1 à 5.

12. Dispositif de réseau configuré pour réaliser l'un quelconque des procédés selon les revendications 6 à 10.
